(19)

Europäisches
Patentamt
European
Patent Office
Office européen
des brevets

(11) **EP 4 787 842 A1**

(12) **EUROPEAN PATENT APPLICATION**
published in accordance with Art. 153(4) EPC

(43) Date of publication:
**05.08.2026 Bulletin 2026/32**

(21) Application number: **23953572.7**

(22) Date of filing: **27.09.2023**

(51) International Patent Classification (IPC):
***H04N 19/167*** *(2014.01)*

(52) Cooperative Patent Classification (CPC):
**H04N 19/167**

(86) International application number:
**PCT/CN2023/122317**

(87) International publication number:
**WO 2025/065420 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XIE, Zhihuang
Dongguan, Guangdong 523860 (CN)**

(74) Representative: **Mewburn Ellis LLP
Aurora Building
Counterslip
Bristol BS1 6BX (GB)**

(54) **CODING METHOD, DECODING METHOD, CODE STREAM, CODER, DECODER AND
STORAGE MEDIUM**

(57)     An encoding method, a decoding method, a
bitstream, an encoder, a decoder, and a storage medium
are disclosed in this disclosure. At the encoding/decoding end, multiple candidate template regions used for an
illuminance compensation mode for a current block are
determined. A target template region corresponding to a
minimum cost value is determined by performing cost
calculation on the multiple candidate template regions
based on template matching. A target illuminance compensation model parameter is determined according to
the target template region. A second prediction block of a
current block is determined by performing illuminance
compensation on a first prediction block of the current
block according to the target illuminance compensation
model parameter. In this way, for the illuminance compensation mode, template regions are introduced, where
different types of template regions contain different samples and different spatial information. Both the encoding
end and the decoding end jointly decide an optimal
template region for calculating a model parameter, where
the optimal template region contains the maximum useful
information. As such, the accuracy of model parameter
calculation can be improved, thereby improving the illuminance compensation effect and coding performance.

```
DETERMINE MULTIPLE CANDIDATE TEMPLATE REGIONS USED
FOR ILLUMINANCE COMPENSATION MODE                          S701

DETERMINE TARGET TEMPLATE REGION CORRESPONDING TO
MINIMUM COST VALUE BY PERFORMING COST CALCULATION
ON CANDIDATE TEMPLATE REGIONS BASED ON TEMPLATE
MATCHING                                                   S702

DETERMINE TARGET ILLUMINANCE COMPENSATION MODEL
PARAMETER ACCORDING TO TARGET TEMPLATE REGION            S703

DETERMINE SECOND PREDICTION BLOCK OF CURRENT BLOCK
BY PERFORMING ILLUMINANCE COMPENSATION ON FIRST
PREDICTION BLOCK OF CURRENT BLOCK ACCORDING TO
TARGET ILLUMINANCE COMPENSATION MODEL PARAMETER          S704

DETERMINE ILLUMINANCE-COMPENSATION-MODE INDICATION
INFORMATION OF CURRENT BLOCK BY MAKING ENCODING
DECISION ON ILLUMINANCE COMPENSATION MODE
ACCORDING TO SECOND PREDICTION BLOCK                     S705

ENCODE ILLUMINANCE-COMPENSATION-MODE INDICATION
INFORMATION, AND SIGNAL OBTAINED ENCODED BITS IN
BITSTREAM                                                S706
```

FIG. 7

EP 4 787 842 A1

**Description**

TECHNICAL FIELD

Embodiments of the disclosure relate to the field of video coding technology, in particular to an encoding method, a decoding method, a bitstream, an encoder, a decoder, and a storage medium.

BACKGROUND

There are often changes in illuminance intensity of video contents in real natural video, such as decrease of illuminance intensity over time, obstruction of dark clouds, or change of flash intensity of a camera. The difference between previous and subsequent pictures in these video contents mainly lies in the intensity of the direct current (DC) components of the pictures, but there is substantially no change in texture information of the contents. However, due to influence of large DC component values, these contents cannot be predicted effectively by means of motion estimation and motion compensation in inter prediction technology, and more residual information is likely to be encoded.

With local illuminance compensation (LIC) technology, it is possible to remove these redundant DC components, predict luma changes accurately, and implement corresponding compensation, which makes residual information smaller and improves coding efficiency. In the existing LIC technology, a top neighbouring reconstructed sample and a left neighbouring reconstructed sample of a current block as well as a top neighbouring reconstructed sample and a left neighbouring reconstructed sample of a reference block are used for establishing an illuminance model and calculating a model parameter.

Under a hybrid video coding framework, during coding of a picture, a codec generally partitions the picture at a fine granularity, for example, partitioning the picture into coding blocks of 128x128 pixels and even smaller-grained coding blocks of 4x4 pixels. In this case, a reconstructed sample around a coding block for calculating the model parameter may not be able to provide useful information, and may instead introduce noise, leading to model misalignment. Therefore, the existing LIC technology needs to be optimized.

SUMMARY

An encoding method, a decoding method, a bitstream, an encoder, a decoder, and a storage medium are provided in embodiments of the disclosure. For an illuminance compensation mode, template regions are introduced. By deciding an optimal template region, the accuracy of model parameter calculation can be improved, thereby improving the illuminance compensation effect and coding performance.

Technical solutions of embodiments of the disclosure can be implemented as follows.

In a first aspect, a decoding method is provided in embodiments of the disclosure. The method is applied to a decoder and includes the following. Illuminance-compensation-mode indication information of a current block is determined. When it is determined according to the illuminance-compensation-mode indication information that an illuminance compensation mode is used for the current block, multiple candidate template regions used for the illuminance compensation mode are determined. A target template region corresponding to a minimum cost value is determined by performing cost calculation on the candidate template regions based on template matching. A target illuminance compensation model parameter is determined according to the target template region. A second prediction block of the current block is determined by performing illuminance compensation on a first prediction block of the current block according to the target illuminance compensation model parameter.

In a second aspect, an encoding method is provided in embodiments of the disclosure. The method is applied to an encoder and includes the following. Multiple candidate template regions used for an illuminance compensation mode are determined. A target template region corresponding to a minimum cost value is determined by performing cost calculation on the candidate template regions based on template matching. A target illuminance compensation model parameter is determined according to the target template region. A second prediction block of a current block is determined by performing illuminance compensation on a first prediction block of the current block according to the target illuminance compensation model parameter. Illuminance-compensation-mode indication information of the current block is determined by making encoding decision on the illuminance compensation mode according to the second prediction block. The illuminance-compensation-mode indication information is encoded, and obtained encoded bits are signalled in a bitstream.

In a third aspect, a bitstream is provided in embodiments of the disclosure. The bitstream is generated by performing bit encoding according to information to-be-encoded. The information to-be-encoded includes at least one of: illuminance-compensation-mode indication information, prediction-mode indication information, an index of motion information, or residual information of a current block.

In a fourth aspect, an encoder is provided in embodiments of the disclosure. The encoder includes a first determining unit, a second determining unit, and an encoding unit. The first determining unit is configured to determine multiple candidate template regions used for an illuminance compensation mode. The first determining unit is configured to determine a target template region corresponding to a minimum cost value by performing cost calculation on the candidate template regions based on template matching. The first determining unit is configured to determine a target illuminance compensation model parameter according to the target template region. The second determining unit is configured to determine a second prediction block of a current block by performing illuminance compensation on a first prediction block of the current block according to the target illuminance compensation model parameter. The second determining unit is configured to determine illuminance-compensation-mode indication information of the current block by making encoding decision on the illuminance compensation mode according to the second prediction block. The encoding unit is configured to encode the illuminance-compensation-mode indication information, and signal obtained encoded bits in a bitstream.

In a fifth aspect, an encoder is provided in embodiments of the disclosure. The encoder includes a first memory and a first processor. The first memory is configured to store a computer program executable by the first processor. The first processor is configured to perform the above encoding method when executing the computer program.

In a sixth aspect, a decoder is provided in embodiments of the disclosure. The decoder includes a decoding unit, a third determining unit, and a fourth determining unit. The decoding unit is configured to determine illuminance-compensation-tion-mode indication information of a current block. The third determining unit is configured to determine multiple candidate template regions used for an illuminance compensation mode, when it is determined according to the illuminance-compensation-mode indication information that the illuminance compensation mode is used for the current block. The third determining unit is configured to determine a target template region corresponding to a minimum cost value by performing cost calculation on the candidate template regions based on template matching. The fourth determining unit is configured to determine a target illuminance compensation model parameter according to the target template region. The fourth determining unit is configured to determine a second prediction block of the current block by performing illuminance compensation on a first prediction block of the current block according to the target illuminance compensation model parameter.

In a seventh aspect, a decoder is provided in embodiments of the disclosure. The decoder includes a second memory and a second processor. The second memory is configured to store a computer program executable by the second processor. The second processor is configured to perform the above decoding method when executing the computer program.

In an eighth aspect, a computer-readable storage medium is provided in embodiments of the disclosure. The computer-readable storage medium is configured to store a bitstream generated according to the above encoding method.

In a ninth aspect, a computer-readable storage medium is provided in embodiments of the disclosure. The computer-readable storage medium is configured to store a computer program which, when executed, is operable to implement the method in the first aspect or the method in the second aspect.

An encoding method, a decoding method, a bitstream, an encoder, a decoder, and a storage medium are provided in embodiments of the disclosure. For an illuminance compensation mode, template regions are introduced, where different types of template regions contain different samples and different spatial information. Both the encoding end and the decoding end jointly decide an optimal template region for calculating a model parameter, where the optimal template region contains the maximum useful information. As such, the accuracy of model parameter calculation can be improved, thereby improving the illuminance compensation effect and coding performance.

BRIEF DESCRIPTION OF THE DRAWINGS

The accompanying drawings described herein are intended for further understanding of the disclosure and constitute part of the disclosure. Exemplary embodiments of the disclosure as well as elaborations thereof are intended for explaining, rather than limiting, the disclosure. In the accompanying drawings:

FIG. 1A is a schematic diagram of a picture in a dark-light shooting scene.
FIG. 1B is a schematic diagram of a picture in a bright-light shooting scene.
FIG. 2 is a schematic diagram illustrating a modeled relationship between a reference picture and a current picture.
FIG. 3 is a schematic diagram illustrating reconstructed samples of a reference picture and a current picture.
FIG. 4 is a schematic diagram illustrating comparison of three pictures in different colours.
FIG. 5A is a schematic block diagram of an encoder provided in embodiments of the disclosure.
FIG. 5B is a schematic block diagram of a decoder provided in embodiments of the disclosure.
FIG. 6 is a schematic diagram of a network architecture of a coding system provided in embodiments of the disclosure.
FIG. 7 is a schematic flowchart of an encoding method provided in embodiments of the disclosure.
FIG. 8A is a schematic diagram of a first candidate template region provided in embodiments of the disclosure.
FIG. 8B is a schematic diagram of a second candidate template region provided in embodiments of the disclosure.

FIG. 8C is a schematic diagram of a third candidate template region provided in embodiments of the disclosure.

FIG. 8D is a schematic diagram of a fourth candidate template region provided in embodiments of the disclosure.

FIG. 8E is a schematic diagram of a fifth candidate template region provided in embodiments of the disclosure

FIG. 9 is a schematic diagram illustrating a size relationship between a current block and a template region provided in embodiments of the disclosure.

FIG. 10 is a schematic diagram illustrating template regions of a reference picture and a current picture provided in embodiments of the disclosure.

FIG. 11 is a schematic flowchart of a decoding method provided in embodiments of the disclosure.

FIG. 12 is a schematic structural diagram of an encoder provided in embodiments of the disclosure.

FIG. 13 is a schematic diagram of a specific hardware structure of an encoder provided in embodiments of the disclosure.

FIG. 14 is a schematic structural diagram of a decoder provided in embodiments of the disclosure.

FIG. 15 is a schematic diagram of a specific hardware structure of a decoder provided in embodiments of the disclosure.

FIG. 16 is a schematic structural diagram of a coding system provided in embodiments of the disclosure.

DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

Unless otherwise defined, all technical and scientific terms used herein have the same meaning as commonly understood by those skilled in the art. The terms used herein are for the purpose of describing embodiments of the disclosure only and are not intended to limit the disclosure.

In the following description, reference to "some embodiments" describes a subset of all possible embodiments, but it may be understood that "some embodiments" may refer to the same or different subsets of all possible embodiments and may be combined with each other without conflict.

It may be further noted that the terms "first/second/third" involved in embodiments of the disclosure are merely for distinguishing similar objects and do not imply a particular ordering with respect to the objects. It may be understood that "first/second/third" may, where appropriate, be interchanged in a particular order or sequence so that embodiments of the disclosure described herein may be implemented in an order other than that illustrated or described herein.

In a video picture, a coding block (CB) is generally represented by a first colour component, a second colour component, and a third colour component. The above three colour components are respectively a luma component, a blue chroma component, and a red chroma component. Specifically, the luma component is generally represented by symbol Y, the blue chroma component is generally represented by symbol Cb or U, and the red chroma component is generally represented by symbol Cr or V. Therefore, the video picture may be represented in a YCbCr format or a YUV format.

Before embodiments of the disclosure are described in further detail, the terms and terminology involved in the embodiments of the disclosure are explained, and the terms and terminology involved in the embodiments of the disclosure are applicable to the following explanations:

moving picture experts group (MPEG)
international standardization organization (ISO)
international electrotechnical commission (IEC)
joint video experts team (JVET)
alliance for open media (AOM)
next-generation video coding standard H.266/versatile video coding (VVC)
VVC reference software test platform (VVC test model, VTM)
audio video standard (AVS)
high-performance model (HPM) for AVS
transform coefficients
quantization parameter
local illuminance compensation (LIC)
skip
merge
intra block copy (IBC)
motion vector (MV)

motion vector prediction (MVP)
motion vector difference (MVD)
block vector (BV)

It may be understood that, digital video compression technology mainly involves compressing a huge amount of digital picture video data, so as to facilitate transmission, storage, or the like. With the surge of internet video and higher requirements for video clarity, although a lot of video data can be saved with existing digital video compression standards, at present, there is still a need for better digital video compression technology to reduce pressure on a bandwidth and a traffic of digital video transmission.

1.1 Existing coding standards

At present, in common video coding standards (for example, H.266/VVC), a block-based hybrid coding framework is adopted. Each picture in video is partitioned into square largest coding units (LCU) of the same size (for example, 128x128 or 64x64). Each LCU can be partitioned into rectangular coding units (CU) according to a certain rule. The CU may be further partitioned into prediction units (PU), transform units (TU), and the like. The hybrid coding framework includes modules such as prediction, transform, quantization, entropy coding, and in-loop filtering. The prediction module includes intra prediction and inter prediction. Inter prediction includes motion estimation and motion compensation. Since there is a strong correlation between neighbouring samples in a video picture, intra prediction is used in the video coding technology to eliminate spatial redundancy between neighbouring samples. Since there is high similarity between neighbouring pictures in video, inter prediction is used in the video coding technology to eliminate temporal redundancy between neighbouring pictures, thereby improving coding efficiency.

The basic process performed by a video codec is as follows. At the encoding end, a picture is partitioned into blocks. The intra prediction or the inter prediction is applied to a current block to generate a prediction block of the current block. The prediction block is subtracted from an original picture of the current block to obtain a residual block. The residual block is then subject to transform and quantization to generate a quantization coefficient matrix. The quantization coefficient matrix is entropy-encoded and output to a bitstream. At the decoding end, the intra prediction or the inter prediction is applied to the current block to generate the prediction block of the current block. In addition, the quantization coefficient matrix is parsed out from the bitstream. The quantization coefficient matrix is inverse-quantized and inverse-transformed to obtain the residual block, which is added to the prediction block to obtain a reconstructed block. The reconstructed blocks form a reconstructed picture. The reconstructed picture is in-loop filtered on a picture or block basis to obtain a decoded picture. The encoding end also requires similar operations as the decoding end to obtain the decoded picture. The decoded picture may be used as a reference picture in inter prediction for subsequent pictures. Block partition information and mode information or parameter information such as for prediction, transform, quantization, entropy coding, and in-loop filtering, determined at the encoding end, may need to be output to the bitstream if necessary. The decoding end determines the same block partition information and mode information or parameter information such as for prediction, transform, quantization, entropy coding, and in-loop filtering as the encoding end through parsing and analysis based on available information, ensuring that the decoded picture obtained by the encoding end is the same as the decoded picture obtained by the decoding end. The decoded picture obtained by the encoding end is also typically referred to as "reconstructed picture". During prediction, the current block may be partitioned into PUs, and during transform, the current block may be partitioned into TUs. The partition for the PUs may be different from the partition for the TUs. The above is the basic process performed by the video codec under the block-based hybrid coding framework. With the development of technology, some modules or operations of the framework or process may be optimized. The current block may be a current CU or a current PU, etc.

JVET, an international video coding standard development organization, has set up a group for research on a coding model beyond H.266/VVC, and the model, i.e., platform test software, is named as enhanced compression model (ECM). ECM has started to adopt newer and more efficient compression algorithms based on VTM10.0, and now has a higher coding performance than VVC by about 13%. ECM not only expands the size of a CU with a specific resolution, but also integrates many intra prediction and inter prediction technologies.

1.2 Illuminance compensation technology

This proposed technology can be understood as improvement on the ECM reference software, to obtain higher coding efficiency.

There are often changes in illuminance intensity of video contents in real natural video, such as decrease of illuminance intensity over time, obstruction of dark clouds, or change of flash intensity of a camera. The difference between previous and subsequent pictures in these video contents mainly lies in the intensity of the direct current (DC) components of the pictures, but there is substantially no change in texture information of the contents. However, due to influence of large DC component values, these contents cannot be predicted effectively by means of motion search and motion compensation in inter prediction technology, and more residual information is likely to be encoded. With LIC technology, it is possible to remove these DC redundant information, predict luma changes accurately, and implement corresponding compensation, which makes residual information smaller and improves coding efficiency. In the following, the LIC technology is referred to as illuminance compensation for the sake of brevity.

The latest video coding standard H.266/VVC has been finalized. JVET, an international video coding joint standard expert team, proposes to explore a video coding standard which is beyond VVC in coding performance on the basis of VVC, and conducts an exploratory experiment (EE2) for the purpose of beyond VVC. The platform reference software used in the exploratory experiment is based on VTM11.0. A new algorithm will be applied thereto and the branch will be changed to the ECM. In addition, multiple expert discussion groups are established for the ECM. The latest version 8.0 of the ECM reference software already has a higher coding performance than VVC by about 19%, while VVC, which is currently the latest standard, is higher by only about 27% than the previous-generation video coding standard H.265/high efficiency video coding (HEVC) in coding performance. It is likely to open a window for exploration and research on the next-generation video coding standard based on the ECM in the near future.

In the early stage of proposal of the ECM, coding tools which VVC does not support is already applied to the reference software, and these coding tools have high coding performance and processing capability for different coding scenarios in the ECM, including LIC. The following will give a brief introduction to the LIC in the ECM.

An illuminance compensation technology is an inter encoding technology. In an inter encoding process, for a current CU, a corresponding reference block is obtained according to an MV (MV information), where the reference block is usually from a different coding picture, in other words, a reference CU does not belong to a current picture. Different pictures have significant or slight change in some specific scenarios, and the illuminance compensation technology is effective for processing some of the changes.

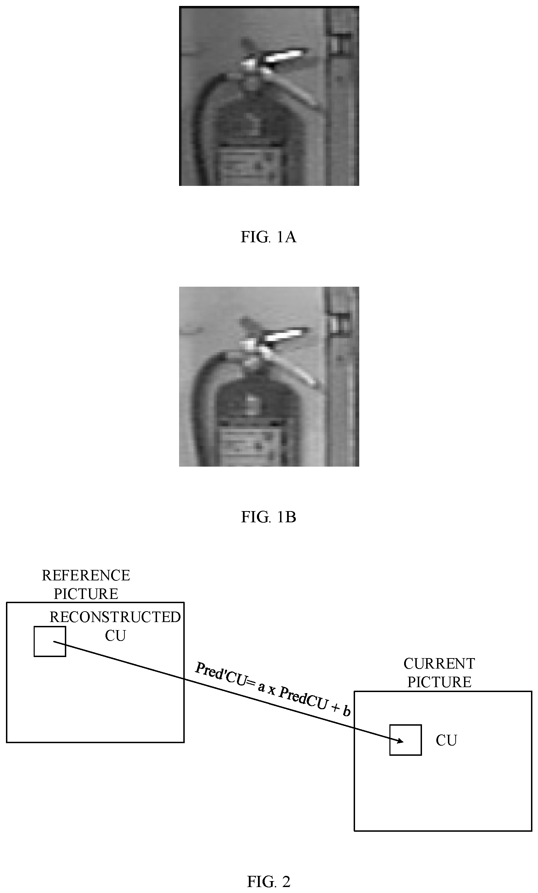

FIG. 1A is a schematic diagram of a picture in a dark-light shooting scene, and FIG. 1B is a schematic diagram of a picture in a bright-light shooting scene. As can be seen from the figures, texture information of left and right parts is substantially the same, and the difference lies in luma change between the two. Since a right picture appears very bright due to illuminance by a camera flash while a left picture is illuminated by normal natural light, there is difference between the two in the figures, and such difference results in heavy burden in video encoding. Supposing that a left block is used as a reference CU for a right block, the texture information of the two is the same, and therefore the difference in texture between the two is very slight, but an overall residual is very large. The reason is that samples in the right picture as a whole has an offset due to illuminance on the samples by the flash, and the residual between the two includes such offset. If the residual is directly transformed and quantized and then signalled into a bitstream, it will lead to high overhead.

In the illuminance compensation technology in the existing ECM reference software, these influences, such as influence caused by the flash or illuminance change, is eliminated by means of linear fitting, so as to achieve better overall prediction effect. The illuminance compensation technology is mainly as follows.

A correlation of change between prediction samples in a CU and reference samples is fitted with aid of a correlation between neighbouring reconstructed samples of a reference CU and neighbouring reconstructed samples of the current CU. The reason is that top reconstructed samples and left reconstructed samples neighbouring the current CU can be obtained if they exist, and top reconstructed samples and left reconstructed samples neighbouring a reference CU in a reference picture can also be obtained. A corresponding fitting model can be obtained by modeling reconstructed samples of the current picture and reconstructed samples of the reference picture.

In the modeling process, illuminance compensation in the ECM is implemented through linear fitting, and the model is simplified as fitting illuminance change between the current picture and the reference picture with a scaling parameter $a$ and an offset parameter $b$. The relationship of change is expressed by model parameters as follows.

$$\text{Pred}'(x,y) = a \cdot \text{Pred}(x,y) + b$$

Pred(x,y) is a prediction block before illuminance compensation, Pred'(x,y) is a prediction block after illuminance compensation, $a$ is a scaling parameter of an illuminance compensation model, and $b$ is an offset parameter of the illuminance compensation model. Both $a$ and $b$ in the formula need to be obtained by calculating picture information of the current picture and picture information of the reference picture, and obtained by modeling reconstructed samples that are spatially neighbouring the current block and neighbouring samples of a reconstructed block in a corresponding reference picture. The derivation formula is as follows.

$$\text{Curr\_Rec}_{neigh} = a \cdot \text{Ref\_Rec}_{neigh} + b$$

In the above formula, $\text{Curr\_Rec}_{neigh}$ is a reconstructed sample of the current picture, and $\text{Ref\_Rec}_{neigh}$ is a reconstructed sample of the reference picture. During coding of a digital video, a coding block in the current picture is refined with regard to illuminance difference by using the illuminance compensation model, to obtain a compensated prediction block. FIG. 2 is a schematic diagram illustrating a modeled relationship between a reference picture and a current picture.

The scaling parameter *a* and the offset parameter *b* need to be calculated with corresponding neighbouring reconstructed samples of a reconstructed reference block in the reference picture and neighbouring reconstructed samples of a CU in the current picture. The scaling parameter *a* and the offset parameter *b* are obtained by modeling according to the correlation between the neighbouring reconstructed samples of the CU in the current picture and reconstructed samples at corresponding positions in the reference picture.

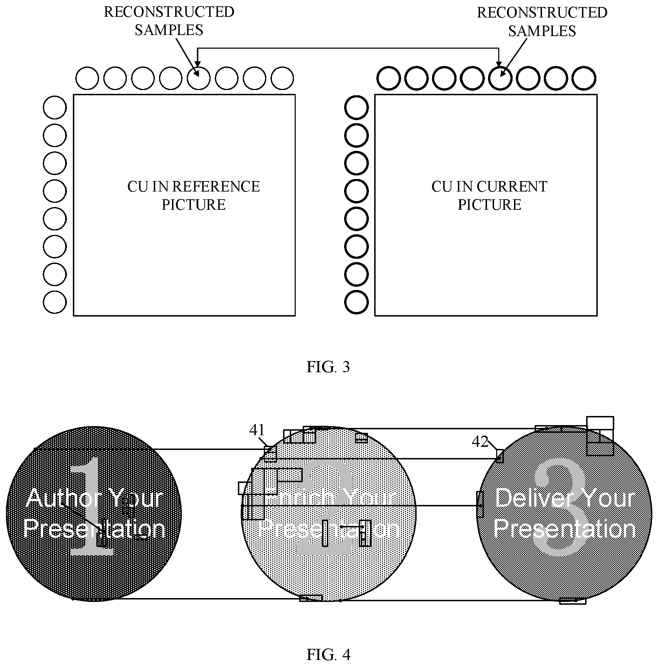

FIG. 3 is a schematic diagram illustrating reconstructed samples of a reference picture and a current picture. As illustrated in FIG. 3, all reconstructed samples (also referred to as reconstructed pixels) are the nearest neighbouring reconstructed samples of a CU. By modeling reconstructed samples at corresponding positions in the two pictures and solving a linear relationship, the scaling parameter *a* and the offset parameter *b* are obtained, and then the linear relationship is applied to a CU in the reference picture (reference picture CU) to obtain a prediction block of a CU in the current picture (current picture CU).

The illuminance compensation model is a linear model in the ECM, and a model parameter includes the scaling factor *a* and the offset parameter *b*. The scaling factor *a* and the offset parameter *b* are obtained by means of least square error. The least square error is to find the best functional match for the data by minimizing the sum of squares of errors. The quantity of reconstructed samples to-be-selected is set according to the width and the height of the current block. If at least one of the width or the height of the current block is equal to 4, 4 reconstructed samples are selected from top neighbouring reconstructed samples of the CU and 4 reconstructed samples are selected from left neighbouring reconstructed samples of the CU. For example, if the current block has a width of 16 and a height of 4, all the 4 left neighbouring reconstructed samples are selected, and 4 top neighbouring reconstructed samples are selected at a step of 3. If neither the width nor the height of the current block is equal to 4, samples whose quantity is the logarithm of the minimum between the width and the height to 2 (log2 (minimum between width and height)) are obtained from the top neighbouring reconstructed samples, and samples whose quantity is the logarithm of the minimum between the width and the height to 2 are obtained from the left neighbouring reconstructed samples.

The model parameters are calculated after obtaining the top reconstructed samples and the left reconstructed samples. Assuming that the obtained reconstructed sample of the reference picture is denoted by *x* and the reconstructed sample of the current picture is denoted by *y*, then the sum of the reconstructed samples of the reference picture is denoted by *sumX*, the sum of the reconstructed samples of the current picture is denoted by *sumY*, the sum of squares of the reconstructed samples of the reference picture is denoted by *sumXX*, and the sum of products of the reconstructed samples of the reference picture and the reconstructed samples of the current picture is denoted by *sumXY*. In this case, the parameters are calculated as follows.

$$a = (sumXY - sumXsumY) / (sumXX - sumXsumX)$$

$$b = sumY - a * sumX$$

*sumXsumY* equals to *sumX * sumY*, and some shift operations involved in the calculation process in the ECM reference software are all simplified processes, which will not be described in detail herein. After the linear model parameters are obtained, linear transformation is performed on a prediction block obtained after motion compensation, to obtain a final prediction block.

If the reconstructed sample for calculating the linear model parameters belongs to an inter reconstructed sample, an interpolation operation is required.

The illuminance compensation technology in the ECM can be applied to a normal inter prediction mode, a merge prediction mode, and a sub-block mode. The normal inter prediction is an inter mode. The merge prediction mode is a merge mode. The sub-block mode is an affine mode. The affine mode is a newly-introduced inter prediction mode of H.266, which has a good prediction effect for rotation and zooming scenes.

An illuminance compensation mode can also be applied to an IBC mode. If the reconstructed sample for calculating the linear model parameters belongs to an intra reconstructed sample, the reconstructed sample may directly participate in the calculation of the linear model parameters.

In addition, there is a coupling relationship between the illuminance compensation technology in the ECM and another technology adopted. In the current block, the illuminance compensation technology is not applied together with a bi-directional optical flow (BDOF) technology or a symmetric MVD (SMVD) technology. Each of these two prediction modes is a bi-directional reference mode. It may be noted that, the illuminance compensation technology may also be free from restriction of the coupling relationship with another technology adopted. In other words, the illuminance compensation technology may also be used for the bi-directional reference mode.

1.3 Calculation of a transform parameter using LIC technology

During calculation of the transform parameter, a top neighbouring reconstructed sample and a left neighbouring reconstructed sample of a current block as well as a top neighbouring reconstructed sample and a left neighbouring reconstructed sample of a reference block can be used together for establishing an illuminance compensation model and calculating a model parameter.

The LIC technology can provide high performance in some scenarios with significant change in illuminance scenes but substantially no change in texture, such as security video, outdoor video, and screen video. Since there is substantially no change in texture, if a matching block can be found, then most of errors between the current block and the reference block are transformed DC coefficients. Therefore, reconstructed samples around the current block and samples around the reference block can be used for modeling, and this DC coefficient difference can be compensated through linear or nonlinear transformation, thereby significantly improving coding efficiency.

However, for LIC, a method for modeling using reference samples and reconstructed samples in both a top template region and a left template region as inputs may not be well suited to some application scenarios.

Under a hybrid video coding framework, during coding of a picture, a codec generally partitions the picture at a fine granularity, for example, partitioning the picture into coding blocks of 128x128 pixels and even smaller-grained coding blocks of 4x4 pixels. In this case, a reconstructed sample around a coding block for calculating the model parameter may not be able to provide useful information, and may instead introduce noise, leading to model misalignment.

FIG. 4 is a schematic diagram illustrating comparison of three pictures in different colours. As illustrated in FIG. 4, for a middle circular picture, with reference to a left circular picture, there is a coding block 41 on the left of the middle circular picture. For the coding block 41, with reference to the same position of the left circular picture, linear transformation of LIC needs to be performed due to the difference in colours. As above mentioned, if both a top template region and a left template region are used for calculating model parameters, because the left region contains entirely white and flat contents, which significantly increases the number (quantity) of white samples, then the proportion of white in a prediction block of the coding block 41 subject to linear transformation may be excessively large. However, actually, non-white parts in the coding block 41 are gradually increasing, and thus if both a top sample and a left sample are used, the model accuracy may instead be affected. Similarly, for a right circular picture, with reference to the middle circular picture, there is a coding block 42 on the left of the right circular picture. For the coding block 42, with reference to the same position of the middle circular picture, linear transformation of LIC needs to be performed due to the difference in colours. As above mentioned, if both a top template region and a left template region are used for calculating model parameters, because the top region contains entirely white and flat contents, which significantly increases the number of white samples, then the proportion of white in a prediction block of the coding block 42 subject to linear transformation may be excessively large. However, actually, non-white parts in the coding block 42 are gradually increasing, and thus if both a top sample and a left sample are used, the model accuracy may instead be affected.

1.4 Position of LIC technology in a hybrid video coding framework

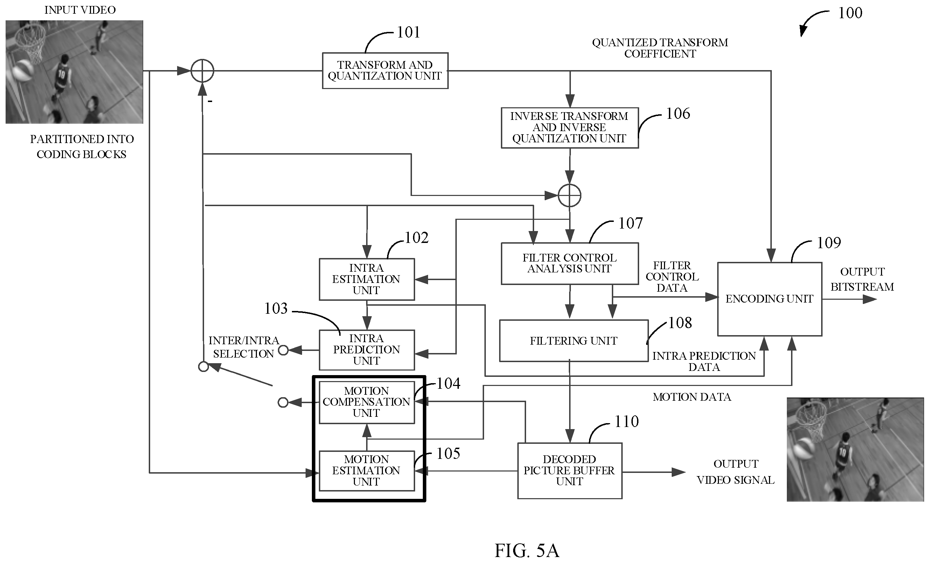

Reference is made to FIG. 5A which is a schematic block diagram of an encoder provided in embodiments of the disclosure. As illustrated in FIG. 5A, the encoder (specifically, "video encoder") 100 includes units such as a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer unit 110. The filtering unit 108 may implement deblocking filtering and sample adaptive offset (SAO) filtering, and the encoding unit 109 may implement header information coding and context-based adaptive binary arithmetic coding (CABAC). An input raw video signal may be partitioned by a coding tree unit (CTU) to obtain a video encoding block. The video encoding block is transformed by the transform and quantization unit 101 processing residual sample information obtained after intra or inter prediction, which includes transforming the residual information from the sample domain to the transform domain and quantizing the resulting transform coefficients to further reduce the bit rate. The intra estimation unit 102 and intra prediction unit 103 are configured to perform intra prediction on the video encoding block. Specifically, the intra estimation unit 102 and intra prediction unit 103 are configured to determine an intra prediction mode to be used for encoding the video encoding block. The motion compensation unit 104 and motion estimation unit 105 are configured to perform inter prediction coding of the received video encoding block relative to one or more reference blocks within one or more reference pictures, to provide temporal prediction information. The motion estimation performed by the motion estimation unit 105 involves generating an MV(s), which can estimate the motion of the video encoding block. Then the motion compensation unit 104 performs motion compensation based on the MV determined by the motion estimation unit 105. After determining the intra prediction mode, the intra prediction unit 103 is further configured to provide the selected intra prediction data to the encoding unit 109, and the motion estimation unit 105 also transmits the calculated MV data to the encoding unit 109. In addition, the inverse transform and inverse quantization unit 106 is configured to reconstruct the video encoding block by reconstructing a residual block in the sample domain. The reconstructed residual block is then filtered by the filter control analysis unit 107 and filtering unit 108 to remove blocking effect artifacts, and then the reconstructed residual block is added to a prediction block within a picture in the decoded picture buffer unit 110 to produce the reconstructed video encoding block. The encoding unit 109 is configured to encode various encoding parameters and quantized transform coefficients. In the CABAC-based encoding algorithm, context content may be based on neighbouring coding blocks and may be used to encode information indicating the determined intra prediction mode, outputting the bitstream of the video signal. The decoded picture buffer unit 110 is configured to store the reconstructed video encoding blocks for prediction reference. As the video picture encoding progresses, new reconstructed video encoding blocks are continuously generated and stored in the decoded picture buffer unit 110.

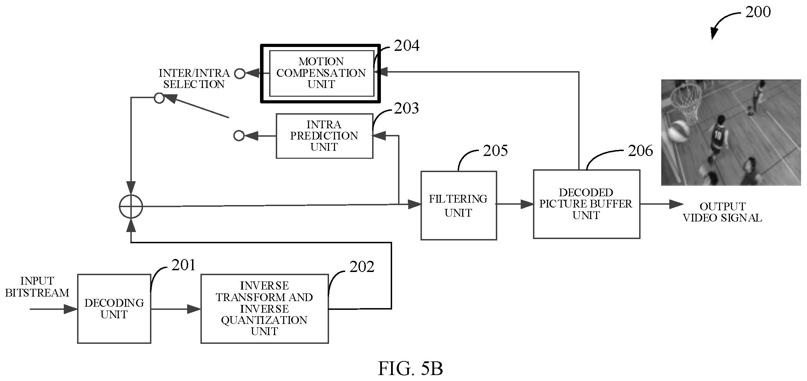

Reference is made to FIG. 5B which is a schematic block diagram of a decoder provided in embodiments of the disclosure. As illustrated in FIG. 5B, the decoder (specifically, "video decoder") 200 includes a decoding unit 201, an inverse transform and inverse quantization unit 202, an intra prediction unit 203, a motion compensation unit 204, a filtering unit 205, a decoded picture buffer unit 206, etc. The decoding unit 201 may implement header information decoding and CABAC decoding, and the filtering unit 205 may implement deblocking filtering and SAO filtering. The input video signal is encoded as illustrated in FIG. 5A and output as a bitstream. The bitstream is then input to the decoder 200 and first passes through the decoding unit 201 to obtain the decoded transform coefficients. The inverse transform and inverse quantization unit 202 processes these transform coefficients to generate residual blocks in the sample domain. The intra prediction unit 203 may produce prediction data for the current video decoding block based on the determined intra prediction mode and data of previously decoded blocks from the current picture. The motion compensation unit 204 determines the prediction information for the video decoding block by parsing MVs and other related syntax elements, and uses this information to generate the prediction block for the video decoding block. The decoded video block is formed by summing the residual block from the inverse transform and inverse quantization unit 202 and the corresponding prediction block generated by the intra prediction unit 203 or motion compensation unit 204. The decoded video signal is then passed through the filtering unit 205 to remove blocking artifacts and thus improve video quality. The decoded video block is then stored in the decoded picture buffer unit 206, which stores reference pictures for subsequent intra prediction or motion compensation and is further configured to output the video signal, that is, the recovered original video signal is obtained.

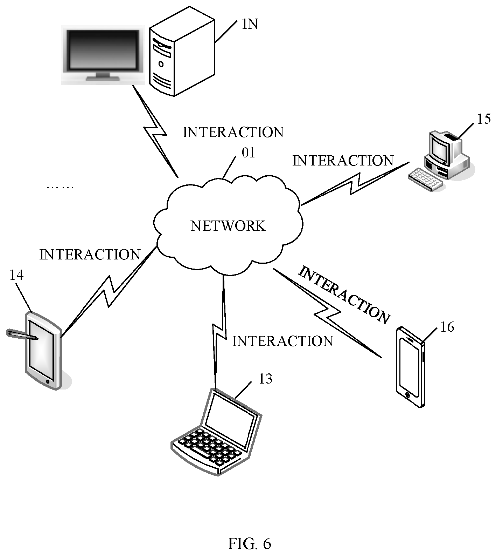

Further, a network architecture of a coding system including an encoder and a decoder is further provided in embodiments of the disclosure. FIG. 6 is a schematic diagram of a network architecture of a coding system provided in embodiments of the disclosure. As illustrated in FIG. 6, the network architecture includes one or more electronic devices 13 to 1N and a communication network 01, where the electronic devices 13 to 1N can perform video interaction through the communication network 01. The electronic device may be various types of devices having video coding functions during implementation. For example, the electronic device may include a mobile phone, a tablet computer, a personal computer, a personal digital assistant, a navigator, a digital phone, a video phone, a television, a sensing device, a server, etc., which is not limited herein. In addition, the decoder or the encoder described in the embodiments of the disclosure may be the electronic device.

It may be noted that, the method disclosed in embodiments of disclosure is mainly applied in the inter encoding as illustrated in FIG. 5A, specifically, the motion compensation unit 104, and applied in the inter decoding as illustrated in FIG. 5B, specifically, the motion compensation unit 204. The method disclosed in embodiments of disclosure may also be applied in the intra prediction unit 103 as illustrated in FIG. 5A and the intra prediction unit 203 as illustrated in FIG. 5B. In other words, embodiments of disclosure may be applied to the encoder, to the decoder, or even to both the encoder and decoder, which is not limited in embodiments of the disclosure.

It may be further noted that, when applied to the encoding end, a "current block" specifically refers to a current encoding block to-be-predicted, and when applied to the decoding end, a "current block" specifically refers to a current decoding block to-be-predicted.

For better understanding of technical solutions of embodiments of the disclosure, the technical solutions of embodiments of the disclosure will be elaborated below. The related art above, as an optional scheme, can be arbitrarily combined with the technical solutions of embodiments of the disclosure, which shall all belong to the protection scope of embodiments of the disclosure. Embodiments of the disclosure include at least part of the following.

In embodiments of the disclosure, for an illuminance compensation mode, template regions are introduced, where different types of template regions contain different samples and different spatial information. Both the encoding end and the decoding end jointly decide an optimal template region for calculating a model parameter, where the optimal template region contains the maximum useful information. As such, the accuracy of model parameter calculation can be improved, thereby improving the illuminance compensation effect and coding performance.

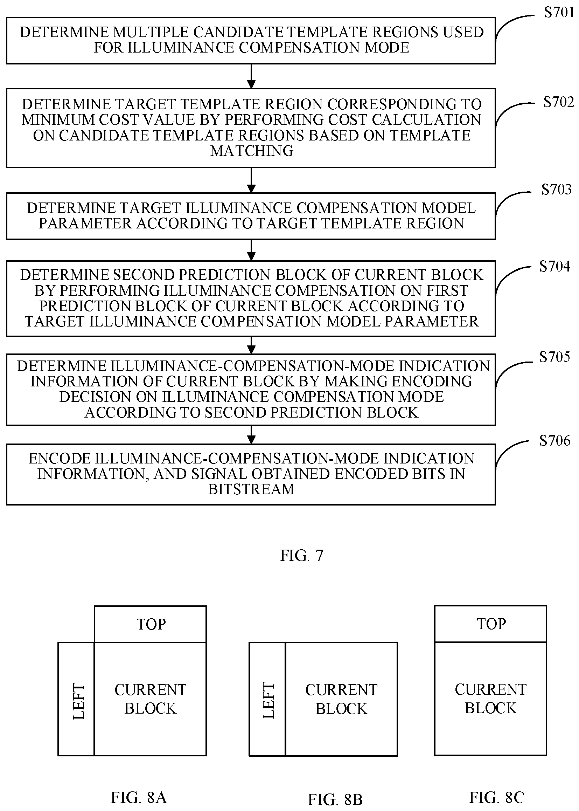

In an embodiment of the disclosure, reference is made to FIG. 7 which is a schematic flowchart of an encoding method provided in embodiments of the disclosure. As illustrated in FIG. 7, the method may include the following.

At S701, multiple candidate template regions used for an illuminance compensation mode are determined.

In some embodiments, at the encoding end, when it is determined that an illuminance compensation technology is enabled for a current block, the multiple candidate template regions used for the illuminance compensation mode are determined. Specifically, the multiple candidate template regions are determined according to reconstructed at least two sub-template regions.

It may be noted that, the sub-template region is a reconstructed region adjacent to or non-adjacent to the current block and a reference block of the current block. In some embodiments, the sub-template region includes at least one of: a top sub-template region, a top-right sub-template region, a left sub-template region, a bottom-left sub-template region, or a top-left sub-template region. Candidate template regions are obtained by one sub-template region or combining more than two sub-template regions, and further, a target template region of the current block is determined from the candidate template regions.

In some embodiments, the sub-template region includes the top sub-template region and the left sub-template region. The multiple candidate template regions are determined according to the reconstructed at least two sub-template regions as follows. A first candidate template region is determined according to the top sub-template region and the left sub-template region, a second candidate template region is determined according to the left sub-template region, and a third candidate template region is determined according to the top sub-template region, as illustrated in FIG. 8A to FIG. 8C.

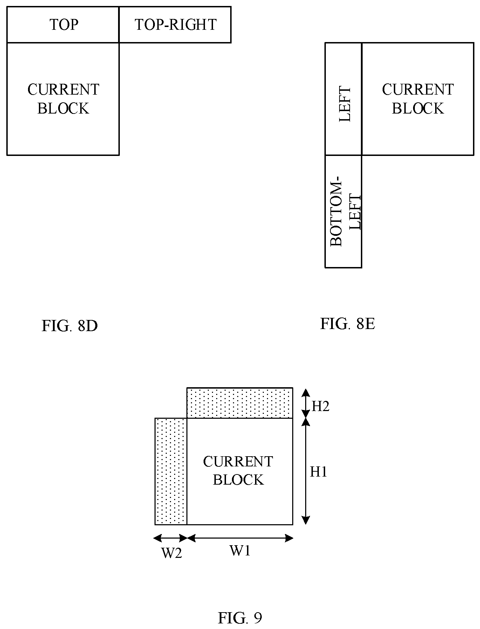

In some other embodiments, the sub-template region further includes the top-right sub-template region and the bottom-left sub-template region. A fourth candidate template region is determined according to the top sub-template region and the top-right sub-template region, and a fifth candidate template region is determined according to the left sub-template region and the bottom-left sub-template region, as illustrated in FIG. 8D and FIG. 8E.

It may be noted that for using a template region obtained by combining more than two sub-template regions, because of a larger number of samples, in some cases, there are more available samples for model parameter calculation compared with a mode in which only the top template region or the left template region is used, and the model accuracy may also be higher. Therefore, the accuracy of model parameter calculation can be improved by: 1, increasing the number of samples for model parameter calculation, and 2, expanding an area of a template region to obtain broader and more spatial information.

For 1, the number of samples may be increased by using a sampling method with a reduced sampling step, and even all available samples in a template region may be selected for calculating linear model parameters.

For 2, the template region may be directly expanded. For example, for the top template region, a template height remains unchanged, and a width of the template region is increased. For the left template region, a template width remains unchanged, and a height of the template region is increased. FIG. 8D illustrates expansion of a top template region, and FIG. 8E illustrates expansion of a left template region.

It may be further noted that in other cases, if a template region obtained by combining more than two sub-template regions is used, too many samples may instead affect the model accuracy. In such cases, spatial information may be restricted by reducing the number of samples for model parameter calculation or reducing an area of a template region, thereby improving the accuracy of model parameter calculation.

In embodiments of the disclosure, different types of template regions are set to contain different samples and different spatial information, and both the encoding end and the decoding end jointly decide an optimal template region for calculating a model parameter, where the optimal template region contains the maximum useful information required for the current block. As such, the accuracy of model parameter calculation can be improved.

It may be noted that, a method for combining the sub-template regions is merely taken as an example for illustration herein. In addition to the above five candidate template regions, different numbers of sub-template regions and different types of sub-template regions may also be combined into candidate template regions of more shapes, which will not be repeated herein.

In some embodiments, the method further includes the following. A height of the candidate template region is determined according to a height of the current block. A width of the candidate template region is determined according to a width of the current block. Exemplarily, as illustrated in FIG. 9, a height H1 of a current block is correlated with a height H2 of a top sub-template region, and a width W1 of the current block is correlated with a width W2 of a left sub-template region. Specifically, the correlation may be positive, i.e., the greater the height of the current block, the greater the height of the top sub-template region, and the greater the width of the current block, the greater the width of the left sub-template region.

In some embodiments, the method further includes the following. It is determined that a height of the candidate template region is a first value preset. It is determined that a width of the candidate template region is a second value preset. The first value is greater than or equal to 1, and the second value is greater than or equal to 1. It may be noted that, a size of the candidate template region may also be a preset size, and the first value and the second value each represent the number of samples. Exemplarily, the first value and the second value each are 1, which indicates that template regions include one row of top neighbouring samples and one column of left neighbouring samples of the current block as well as one row of top neighbouring samples and one column of left neighbouring samples of the reference block. The first value and the second value each are 2, which indicates that template regions include two rows of top neighbouring samples and two columns of left neighbouring samples of the current block as well as two rows of top neighbouring samples and two columns of left neighbouring samples of the reference block.

In some embodiments, the method further includes the following. When the height of the current block is within a first height range, it is determined that the height of the candidate template region is a first candidate height value. When the height of the current block is within a second height range, it is determined that the height of the candidate template region is a second candidate height value. When the width of the current block is within a first width range, it is determined that the width of the candidate template region is a first candidate width value. When the width of the current block is within a second width range, it is determined that the width of the candidate template region is a second candidate width value.

In some embodiments, the method further includes the following. Whether both a first sub-template region of the current block and a first sub-template region of a reference block are available is detected. If both the first sub-template region of the current block and the first sub-template region of the reference block are available, the candidate template region is determined based on the first sub-template region. If the first sub-template region of the current block and/or the first sub-template region of the reference block is unavailable, the first sub-template region is ignored.

It may be noted that for the selection of the candidate template region, boundary check may be introduced, and for a sub-template region in which no sample is available, this sub-region is not used for calculating model parameters. Exemplarily, for the left boundary of a picture, none of a left sub-template region, a bottom-left sub-template region, and a top-left sub-template region is available. For the top boundary of the picture, none of a top sub-template region, a top-right sub-template region, and the top-left sub-template region is available.

At S702, a target template region corresponding to a minimum cost value is determined by performing cost calculation on the candidate template regions based on template matching.

In embodiments of the disclosure, a cost function for cost calculation may be sum of absolute differences (SAD), sum of absolute transformed differences (SATD), mean squared error (MSE), sum of squared differences (SSD), mean absolute deviation (MAD), mean square differences (MSD), absolute value of transform coefficients (e.g., discrete cosine transform (DCT) coefficients), normalized correlation coefficient (NCC), or the like, which is not specifically limited herein.

In some embodiments, the target template region corresponding to the minimum cost value is determined by performing cost calculation on the candidate template regions based on template matching as follows. A template region of the current block and a template region of a reference block are determined according to the candidate template regions. Candidate illuminance compensation model parameters corresponding to the candidate template regions are determined according to a first reconstructed sample(s) in the template region of the current block and a second reconstructed sample(s) in the template region of the reference block. A first prediction sample in the template region of the current block is determined according to the candidate illuminance compensation model parameters. First cost values of the candidate template regions are determined by performing cost calculation according to a third reconstructed sample(s) and the first prediction sample in the template region of the current block. The target template region corresponding to the minimum cost value is determined according to the first cost values.

In some embodiments, an illuminance model is a linear model constructed based on a linear function, and an illuminance compensation model parameter includes at least one of: a scaling parameter, an offset parameter, or a shift parameter. In some other embodiments, an illuminance model is a nonlinear model constructed based on a nonlinear function, and a model parameter includes any parabolic equation parameter and a shift parameter.

In the modeling process, illuminance compensation in an ECM is implemented through linear fitting, and the model is simplified as fitting illuminance change between a current picture and a reference picture with a scaling parameter $a$ and an offset parameter $b$. The relationship of change is expressed by model parameters as follows.

$$\mathrm{Pred}'(\mathrm{x,y}) = a \cdot \mathrm{Pred}(\mathrm{x,y}) + b$$

Pred(x,y) is a first prediction block before illuminance compensation, Pred'(x,y) is a second prediction block after illuminance compensation, $a$ is a scaling parameter of an illuminance compensation model, and $b$ is an offset parameter of the illuminance compensation model. Both $a$ and $b$ in the formula need to be obtained by calculating a reconstructed sample of the current picture and a reconstructed sample of the reference picture, and obtained by modeling a reconstructed sample in the template region of the current block and a reconstructed sample in a template region of a reference block in a corresponding reference picture. The derivation formula is as follows

$$\mathrm{Curr\_Rec}_{neigh} = a \cdot \mathrm{Ref\_Rec}_{neigh} + b$$

In the above formula, $\mathrm{Curr\_Rec}_{neigh}$ is the reconstructed sample of the current picture, and $\mathrm{Ref\_Rec}_{neigh}$ is the reconstructed sample of the reference picture. During coding of a digital video, the current block is refined with regard to illuminance difference by using the illuminance compensation model, to obtain a compensated prediction block.

The scaling parameter $a$ and the offset parameter $b$ need to be calculated with the reconstructed sample in the template region of the current block and the reconstructed sample in the template region of the reference block in the corresponding reference picture. Specifically, assuming that an obtained second reconstructed sample of the reference picture is denoted by $x$ and a first reconstructed sample of the current picture is denoted by $y$, then the sum of the second reconstructed samples of the reference picture is denoted by *sumX*, the sum of the first reconstructed samples of the current picture is denoted by *sumY*, the sum of squares of the second reconstructed samples of the reference picture is denoted by *sumXX*, and the sum of products of the second reconstructed samples of the reference picture and the first reconstructed samples of the current picture is denoted by *sumXY*. In this case, the parameters are calculated as follows.

$$a = (sumXY - sumXsumY) / (sumXX - sumXsumX)$$

$$b = sumY - a * sumX$$

*sumXsumY* equals to *sumX* * *sumY*. The model parameters such as the scaling parameter *a* and the offset parameter *b* are obtained by means of least square error, etc. In a specific implementation, a shift parameter *shift* may also be included. These parameters are applied to fourth reconstructed samples on the top and left of the reference block to obtain compensated reconstructed samples on the top and left of the reference block (i.e., first prediction samples on the top and left of the current block), and first cost values between these compensated reconstructed samples and third reconstructed samples on the top and left of the current block are calculated.

In some embodiments, a reconstructed sample in the template region of the reference block is a motion-compensated reconstructed sample or a sample that is not motion-compensated. Exemplarily, the motion compensation may specifically be interpolation filtering.

In some embodiments, the first prediction sample in the template region of the current block is determined according to the candidate illuminance compensation model parameter as follows. The candidate illuminance compensation model parameter is applied to a fourth reconstructed sample in the template region of the reference block, to obtain the first prediction sample in the template region of the current block. Specifically, an illuminance compensation model is constructed according to the candidate illuminance compensation model parameter, and the fourth reconstructed sample is input to the illuminance compensation model for illuminance compensation, to output the first prediction sample.

It may be noted that, the first reconstructed sample is a reconstructed sample for model parameter calculation in the template region of the current block, the second reconstructed sample is a reconstructed sample for model parameter calculation in the template region of the reference block, the third reconstructed sample is a reconstructed sample for calculating the first cost value in the template region of the current block, and the fourth reconstructed sample is a reconstructed sample for calculating the first prediction sample in the template region of the reference block. The first reconstructed sample and the second reconstructed sample may be the same sample or different samples in the template region of the current block. The second reconstructed sample and the fourth reconstructed sample may be the same sample or different samples in the template region of the reference block.

It may be further noted that, the reconstructed samples in embodiments of the disclosure may be reconstructed samples of luma components, and the current block may be a luma block. Alternatively, the reconstructed samples may be reconstructed samples of chroma components, and the current block may be a chroma block.

In some embodiments, the first reconstructed sample is determined by sampling a first template region in the template region of the current block. The second reconstructed sample is determined by sampling a first template region in the template region of the reference block. The third reconstructed sample is determined by sampling a second template region in the template region of the current block. The fourth reconstructed sample is determined by sampling a second template region in the template region of the reference block.

In some embodiments, part of reconstructed samples are collected from the first template region and the second template region according to a sampling step preset. The sampling step may be correlated with a template size. Exemplarily, if at least one of the width or the height of the current block is equal to 4, 4 reconstructed samples are selected from top neighbouring reconstructed samples of a CU and 4 reconstructed samples are selected from left neighbouring reconstructed samples of the CU. For example, if the current block has a width of 16 and a height of 4, all the 4 left neighbouring reconstructed samples are selected, and 4 top neighbouring reconstructed samples are selected at a step of 3. If neither the width nor the height of the current block is equal to 4, samples whose quantity is the logarithm of the minimum between the width and the height to 2 are obtained from the top neighbouring reconstructed samples, and samples whose quantity is the logarithm of the minimum between the width and the height to 2 are obtained from the left neighbouring reconstructed samples.

In some other embodiments, all of reconstructed samples are collected from the first template region and the second template region.

In some embodiments, the first template region is non-adjacent to the current block and the reference block of the current block, and the second template region is adjacent to the current block and the reference block of the current block. The first template region does not overlap with the second template region, or the first template region partially overlaps with the second template region.

It may be noted that, a reconstructed sample for calculating a model parameter is obtained from the first template region, and a reconstructed sample for calculating a cost value is obtained from the second template region. When the first template region is different from the second template region, it may mean that a template prediction method may be the same as a prediction method for the current block. That is, the second template region is used for calculating the model parameter, and the first template region is used for calculating a prediction value. The advantage of doing this is to provide a true prediction value for this model parameter on a template region.

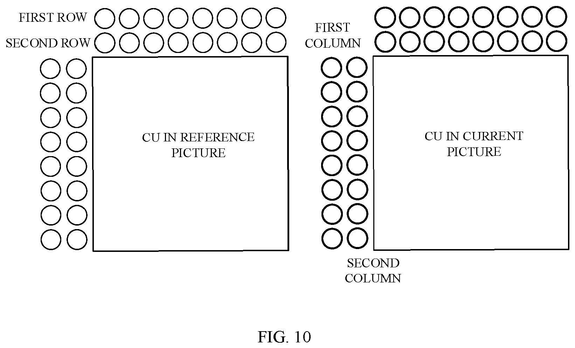

FIG. 10 is a schematic diagram illustrating template regions of a reference picture and a current picture provided in embodiments of the disclosure. The template regions include two rows of reconstructed samples on the top of and two columns of reconstructed samples on the left of a current block as well as two rows of reconstructed samples on the top of and two columns of reconstructed samples on the left of a reference block. A first template region includes the first row of reconstructed samples and the first column of reconstructed samples, and a second template region includes the second row of reconstructed samples and the second column of reconstructed samples. During decision-making, reconstructed samples in the first row and the first column of a template are applied to calculate model parameters. The model parameters are then applied to the second row and the second column of a template region of the reference block, to obtain prediction samples in the second row and the second column of a template region of the current block. An optimal template region is decided by calculating costs according to reconstructed samples and the prediction samples in the second row and the second column of the template region of the current block.

During application, samples in the second row and second column of a template region are applied to calculate model parameters, and the model parameters are then applied to a first prediction block to obtain an illuminance-compensated second prediction block.

It may be noted that, a template region for model parameter calculation may include one row of top neighbouring samples and one column of left neighbouring reconstructed samples of the current block as well as one row of top neighbouring samples and one column of left neighbouring reconstructed samples of the reference block of the current block. Alternatively, the template region may include multiple rows of top neighbouring samples and multiple columns of left neighbouring reconstructed samples of the current block as well as multiple rows of top neighbouring samples and multiple columns of left neighbouring reconstructed samples of the reference block of the current block. Alternatively, the template region may include one or more rows of top non-neighbouring samples and one or more columns of left non-neighbouring reconstructed samples of the current block as well as one or more rows of top non-neighbouring samples and one or more columns of left non-neighbouring reconstructed samples of the reference block of the current block, which will not be enumerated herein.

In some embodiments, the first prediction sample in the template region of the current block is determined according to the candidate illuminance compensation model parameter as follows. The candidate illuminance compensation model parameter is applied to a prediction sample of the first prediction block, to determine the first prediction sample in the template region of the current block. Specifically, an illuminance compensation model is constructed according to the candidate illuminance compensation model parameter, and the prediction sample of the first prediction block is input to the illuminance compensation model for illuminance compensation, to output the first prediction sample. That is to say, model parameters may also be applied to prediction samples of the first prediction block to obtain first prediction samples in a model region of the current block, and these first prediction samples are used for calculating cost values together with reconstructed samples in the template region of the current block. Specifically, the model parameters may be applied to the first row of prediction samples and the first column of prediction samples of the first prediction block, or may be applied to the second row of prediction samples and the second column of prediction samples of the first prediction block.

In some embodiments, the method further includes the following. A second prediction sample in the template region of the current block is determined according to a reconstructed sample in the template region of the reference block. A second cost value of the candidate template region is determined by performing cost calculation according to a reconstructed sample and the second prediction sample in a current template region. When the minimum cost value is the first cost value, it is determined that the illuminance compensation mode is used for the current block. When the minimum cost value is the second cost value, it is determined that the illuminance compensation mode is not used for the current block.

Exemplarily, the reconstructed sample in the template region of the reference block is determined as the second prediction sample, or the reconstructed sample in the template region of the reference block after motion compensation is determined as the second prediction sample. The second cost value can be understood as a cost value corresponding to the current block without using the illuminance compensation mode. The minimum cost value being the first cost value indicates that the illuminance compensation mode is used, and the minimum cost value being the second cost value indicates that the illuminance compensation mode is not used.

In some embodiments, the method further includes the following. If it is determined that a prediction mode for the current block is a merge mode, the second prediction sample in the template region of the current block is determined according to the reconstructed sample in the template region of the reference block. That is to say, when the prediction mode for the current block is the merge mode, the second cost value is calculated according to the reconstructed sample in the template region of the current block and the reconstructed sample in the template region of the reference block.

It may be noted that in practical application, a second cost value corresponding to each candidate template region may be calculated, or only a second cost value corresponding to a specific template region may be calculated. Exemplarily, the specific template region may include the top sub-template region and the left template region.

It may be further noted that, the second cost value may be calculated according to all of reconstructed samples in a template region, or the second cost value may be calculated by collecting part of reconstructed samples from the template region according to a sampling step preset.

At S703, a target illuminance compensation model parameter is determined according to the target template region.

It may be noted that, the target illuminance compensation model parameter is determined by performing model parameter calculation according to a reconstructed sample in a target template region of the current block and a reconstructed sample in a target template region of the reference block.

In some embodiments, the target illuminance compensation model parameter is determined according to the target template region as follows. The template region of the current block and the template region of the reference block is determined according to the target template region. The target illuminance compensation model parameter corresponding to the target template region is determined according to the third reconstructed sample in the template region of the current block and a fourth reconstructed sample in the template region of the reference block.

Specifically, the third reconstructed sample is determined by sampling a second template region in the template region of the current block, and the fourth reconstructed sample is determined by sampling a second template region in the template region of the reference block.

In some embodiments, an illuminance model is a linear model constructed based on a linear function, and an illuminance compensation model parameter includes at least one of: a scaling parameter, an offset parameter, or a shift parameter. In some other embodiments, an illuminance model is a nonlinear model constructed based on a nonlinear function, and a model parameter includes any parabolic equation parameter and a shift parameter.

In some other embodiments, a candidate illuminance compensation model parameter obtained during decision-making of the target template region is obtained as the target illuminance compensation model parameter. It may be noted that during decision-making and application, if the same reconstructed sample is used for calculating a model parameter, a candidate illuminance parameter obtained during decision-making of the target template region may be directly obtained without re-calculating the model parameter, thereby improving coding efficiency.

At S704, a second prediction block of a current block is determined by performing illuminance compensation on a first prediction block of the current block according to the target illuminance compensation model parameter.

In some embodiments, the method further includes the following. A reference block of the current block in a reference picture is determined according to a target prediction mode. The first prediction block is determined according to the reference block.

It may be noted that, the target prediction mode may be any prediction mode in which the illuminance compensation mode is used. Exemplarily, the target prediction mode may be an inter prediction mode, such as a normal inter prediction mode, a merge mode, or a sub-block mode. The target prediction mode may also be an intra prediction mode, such as an IBC mode.

In some embodiments, the first prediction block is determined according to the reference block as follows. If the target prediction mode is an IBC mode, the first prediction block is determined by performing block copy on the reference block. If the target prediction mode is an inter prediction mode, the first prediction block is determined by performing motion compensation on the reference block.

Further, when it is determined that the illuminance compensation mode is used for the current block, the second prediction block of the current block is determined by performing illuminance compensation on the first prediction block of the current block according to the target illuminance compensation model parameter.

At S705, illuminance-compensation-mode indication information of the current block is determined by making encoding decision on the illuminance compensation mode according to the second prediction block.

In some embodiments, a reconstructed block of the current block is determined according to the second prediction block, cost calculation is performed according to the reconstructed block and an original block, whether the illuminance compensation mode is used in a current prediction mode is determined according to a cost value, and the illuminance-compensation-mode indication information is generated.

In some embodiments, the illuminance-compensation-mode indication information includes a first syntax element flag. The first syntax element flag indicates whether the illuminance compensation mode is used for the current block.

It may be noted that, the current block may be a block for any illuminance compensation mode, and the first syntax element flag may be a block-level syntax element flag. The first syntax element flag may also be a syntax element flag at a level of a picture unit where the current block is located, which indicates whether the illuminance compensation mode is used for the picture unit where the current block is located.

In some embodiments, the illuminance-compensation-mode indication information further includes a second syntax element flag. The second syntax element flag includes at least one of: a sequence-level syntax element flag indicating whether the illuminance compensation mode is enabled for a picture sequence where the current block is located; a picture-level syntax element flag indicating whether the illuminance compensation mode is enabled for a picture where the current block is located; a CTU-level syntax element flag indicating whether the illuminance compensation mode is enabled for a CTU where the current block is located; or a slice-level syntax element flag indicating whether the illuminance compensation mode is enabled for a slice where the current block is located.

It may be noted that, the second syntax element flag may be a syntax element flag at a level of a picture unit where the current block is located, which indicates whether the illuminance compensation mode is used for the picture unit where the current block is located. The picture unit may be any picture unit such as a picture sequence, a picture, a slice, or a CTU. Exemplarily, if the second syntax element flag is a sequence-level syntax element flag (represented by sps_lic_enable_flag), and it is determined according to the second syntax element flag that the illuminance compensation mode is enabled for a current picture unit, then the encoding end tries to use the illuminance compensation mode for prediction and indicates via the first syntax element flag whether the illuminance compensation mode is used for the current block. If it is determined according to the second syntax element flag that the illuminance compensation mode is disabled for the current picture unit, then the encoding end does not try to use the illuminance compensation mode for prediction.

In some embodiments, the method further includes the following. An area of the current block is determined. When the area is within a preset area range, whether the illuminance compensation mode is used is determined according to the illuminance-compensation-mode indication information of the current block. When the area is out of the preset area range, it is determined that the illuminance compensation mode is not used for the current block.

It may be noted that, if the area of the current block does not satisfy a preset area condition, it is determined that the illuminance compensation mode is not used for the current block, and in this case, the encoding end does not try to use the illuminance compensation mode for prediction. If the area of the current block satisfies the preset area condition, the encoding end tries to use the illuminance compensation mode for prediction.

In some embodiments, the preset area range includes: the area of the current block being greater than a first area threshold and less than a second area threshold. Alternatively, the preset area range includes: the area of the current block being greater than the first area threshold. Exemplarily, if a region area of the current block is greater than threshold 1 (i.e., 32 samples) and the region area of the current block is less than threshold 2 (i.e., 256 samples), then the encoding end tries an LIC prediction method. Alternatively, if the region area of the current block is greater than threshold 1 (i.e., 32 samples), then the encoding end tries the LIC prediction method.

It may be further noted that, if the area of the current block satisfies the preset area condition, and it is determined according to the second syntax element flag that the illuminance compensation mode is enabled for a current picture unit, then the encoding end tries to use the illuminance compensation mode for prediction.

In some embodiments, the illuminance-compensation-mode indication information of the current block is determined as follows. The illuminance-compensation-mode indication information of the current block is determined according to whether the illuminance compensation mode is used for the current block. That is to say, whether the illuminance compensation mode is used for the current block is determined according to an encoding decision result, and the illuminance-compensation-mode indication information is encoded, so as to indicate to the decoding end whether the illuminance compensation mode is used to perform illuminance compensation on a prediction block of the current block.

In some embodiments, the method further includes the following. Prediction-mode indication information of the current block is determined according to a prediction mode for the current block. When it is determined according to the prediction-mode indication information that the prediction mode for the current block is a first-type prediction mode, the illuminance-compensation-mode indication information of the current block is determined according to whether the illuminance compensation mode is used for the current block. The prediction-mode indication information is encoded, and obtained encoded bits are signalled in a bitstream.

It may be noted that, when the prediction mode for the current block is the first-type prediction mode, the illuminance-compensation-mode indication information of the current block is set according to an encoding decision result and then encoded. Exemplarily, the first-type prediction mode includes an inter advanced motion vector prediction (AMVP) mode, a normal inter mode, or the like.

In some other embodiments, the illuminance-compensation-mode indication information of the current block is determined as follows. An index of motion information of the current block is determined, where the index of the motion information indicates illuminance-mode compensation information of the current block. It may be noted that, the index of the motion information is used for indexing the motion information of the current block, to determine a reference block of the current block. Since each motion information contains usage flags of all available technologies including an illuminance compensation usage flag, whether the illuminance compensation mode is used for the current block may be determined through inheritance of neighbouring information. In some embodiments, the motion information may be an inter MV or an intra BV.

In some embodiments, the method further includes the following. Prediction-mode indication information of the current block is determined according to a prediction mode for the current block. When it is determined according to the prediction-mode indication information that the prediction mode for the current block is a second-type prediction mode, the index of the motion information of the current block is determined. The index of the motion information is determined as the illuminance-compensation-mode indication information of the current block. The prediction-mode indication information is encoded, and obtained encoded bits are signalled in a bitstream.

It may be noted that, when the prediction mode for the current block is the second-type prediction mode, the index of the motion information is encoded as the illuminance-compensation-mode indication information of the current block, the index of the motion information is decoded at the decoding end, and illuminance-compensation-mode indication information of a corresponding reference block is inherited for the current block. Exemplarily, the second-type prediction mode includes an inter merge mode, etc. It may be further noted that for the inter merge mode, whether to use LIC may not be determined through inheritance of neighbouring information of a reference picture, and instead through encoding decision-making, whether to use LIC may be transmitted to the decoding end in the form of a flag and an index. Then, the decoding end parses a flag indicating whether to use LIC in a merge mode to determine whether LIC technology is used for the current block, and parses the index to determine motion information.

At S706, the illuminance-compensation-mode indication information is encoded, and obtained encoded bits are signalled in a bitstream.

In some embodiments, the method further includes the following. Based on a determination that the illuminance compensation mode is not used for the current block, a reconstructed block of the current block is determined according to the first prediction block. Residual information of the current block is determined according to an original block and the reconstructed block of the current block. The residual information is encoded, and obtained encoded bits are signalled in a bitstream.

In some embodiments, the method further includes the following. Based on a determination that the illuminance compensation mode is used for the current block, a reconstructed block of the current block is determined according to the second prediction block. Residual information of the current block is determined according to an original block and the reconstructed block of the current block. The residual information is encoded, and obtained encoded bits are signalled in a bitstream.

According to the above technical solution, for the illuminance compensation mode, template regions are introduced, where different types of template regions contain different samples and different spatial information. The encoding end decides an optimal template region for calculating the model parameter, where the optimal template region contains the maximum useful information. As such, the accuracy of model parameter calculation can be improved, thereby improving the illuminance compensation effect and coding performance.

The encoding method provided in embodiments of the disclosure will be further exemplified based on the above embodiment.

In this embodiment, at the encoding end, an encoder traverses prediction modes. If a type of a current prediction mode is a prediction mode in which an illuminance compensation mode can be used, the encoder obtains an enable flag of illuminance compensation technology. The flag is a sequence-level flag indicating that LIC technology is enabled for the encoder currently, which may be, for example, in the form of sps_lic_enable_flag.

1. If an LIC enable flag is true, a region area of a current block is greater than threshold 1, and the region area of the current block is less than threshold 2, then the encoding end tries an LIC prediction method, i.e., the encoding end performs 2. If the LIC enable flag is not true or other conditions such as a condition regarding a region area are not satisfied, then the encoding end does not try the LIC prediction method, i.e., the encoding end skips 2 and directly performs 3.

It may be noted that the limitation on the use of the LIC technology may, however, be modified according to the coupling between various technologies. For example, in this embodiment, the limitation that LIC cannot be used for a CU with a product of a width and a height less than 32 may be adopted, and there is no limitation for a large area.

2. A reference block in a reference picture is obtained according to an MV (or BV), and an initial prediction block is obtained by performing motion compensation on the reference block. Reconstructed samples on the top and left of the current block are obtained. Reconstructed samples on the top and left of the reference block in the reference picture are obtained and motion-compensated.

Cost1: Model parameters are calculated using the reconstructed samples on the top and left of the current block and the reconstructed samples on the top and left of the reference block. The calculation process is as described in 1.2 above. Alternatively, the model parameters such as a scaling parameter *a* and an offset parameter *b* are obtained by means of least square error, etc. In a specific implementation, a shift parameter *shift* may also be included. These parameters are applied to the reconstructed samples on the top and left of the reference block to obtain compensated reconstructed samples on the top and left of the reference block, and SAD cost values between these compensated reconstructed samples and the reconstructed samples on the top and left of the current block are calculated and represented by cost1.

Cost2: Model parameters are calculated using only reconstructed samples on the top of the current block and reconstructed samples on the top of the reference block. The calculation process is as described in 1.2 above. Alternatively, the model parameters such as a scaling parameter *a* and an offset parameter *b* are obtained by means of least square error, etc. In a specific implementation, a shift parameter *shift* may also be included. These parameters are applied to the reconstructed samples on the top and left of the reference block to obtain compensated reconstructed samples on the top and left of the reference block, and SAD cost values between these compensated reconstructed samples and the reconstructed samples on the top and left of the current block are calculated and represented by cost2.

Cost3: Model parameters are calculated using only reconstructed samples on the left of the current block and reconstructed samples on the left of the reference block. The calculation process is as described in 1.2 above. Alternatively, the model parameters such as a scaling parameter *a* and an offset parameter *b* are obtained by means of least square error, etc. In a specific implementation, a shift parameter *shift* may also be included. These parameters are applied to the reconstructed samples on the top and left of the reference block to obtain compensated reconstructed samples on the top and left of the reference block, and SAD cost values between these compensated reconstructed samples and the reconstructed samples on the top and left of the current block are calculated and represented by cost3.

Decision: SAD cost values of different template regions are compared, and a template region corresponding to a minimum cost is determined as a region for calculating an illuminance compensation model for the current block. Model parameters of the current block are calculated according to samples in the determined template region, with the same calculation process as that in the above, so as to obtain a scaling parameter *a*, an offset parameter *b*, and a shift parameter *shift*, etc. These parameters are applied to the initial prediction block to obtain an illuminance-compensated prediction block. After subsequent operations such as obtaining of a residual between the prediction block and an original block, transform, and quantization, a rate-distortion cost is obtained according to a codeword required for a current mode and a distortion degree between a current reconstructed picture and an original picture.

In some embodiments, a cost value for which the illuminance compensation mode is not used may also be calculated. If a current inter prediction mode is Merge, SAD cost values between the reconstructed samples on the top and left of the current block and motion-compensated reconstructed samples on the top and left of the reference block are calculated and represented by cost0. During decision-making, the SAD cost values are compared. If cost0 is a minimum cost value, it indicates that the illuminance compensation technology is not applicable to the current block, and thus illuminance compensation is not performed on the current block. Otherwise, a template region corresponding to a minimum cost is determined as a region for calculating an illuminance compensation model for the current block.

It may be noted that, a template region for model parameter calculation may include one row of top neighbouring reconstructed samples and one column of left neighbouring reconstructed samples of the current block as well as one row of top neighbouring reconstructed samples and one column of left neighbouring reconstructed samples of the reference block of the current block. Alternatively, the template region may include multiple rows of top neighbouring samples and multiple columns of left neighbouring reconstructed samples of the current block as well as multiple rows of top neighbouring samples and multiple columns of left neighbouring reconstructed samples of the reference block of the current block. Alternatively, the template region may include multiple rows of top non-neighbouring samples and multiple columns of left non-neighbouring reconstructed samples of the current block as well as multiple rows of top non-neighbouring samples and multiple columns of left non-neighbouring reconstructed samples of the reference block of the current block, which will not be enumerated herein.

It may be further noted that, the model parameters are applied to a template region of the reference block to obtain illuminance-compensated reconstructed samples, and these samples are used for calculating SAD cost values together with the reconstructed samples on the top and left of the current block. The model parameters may also be applied to the first row and the first column of a motion-compensated first prediction block to obtain one row and one column of compensated prediction samples, and these samples are used for calculating SAD cost values together with the reconstructed samples on the top and left of the current block.

3. The encoding end further traverses other prediction technologies, calculates a rate-distortion cost value corresponding to each prediction technology, and selects a prediction mode corresponding to a minimum cost value as an optimal prediction mode for the current block.

If a rate-distortion cost corresponding to the illuminance compensation mode is the minimum, the illuminance compensation technology may be used for the current block. If the current prediction mode is an inter AMVP mode, a CU-level usage flag of the illuminance compensation technology needs to be set to true and signalled in a bitstream. If the current prediction mode is an inter merge mode, only an index of this current merge candidate needs to be signalled in a bitstream.

It may be noted that for LIC technology in a merge mode, whether to use LIC may not be determined through inheritance of neighbouring information, and instead through decision-making at the encoding end, whether to use LIC may be transmitted to the decoding end in the form of a flag and an index. Then, the decoding end parses a usage flag of this technology in the merge mode to determine whether the LIC technology is used for a current CU.

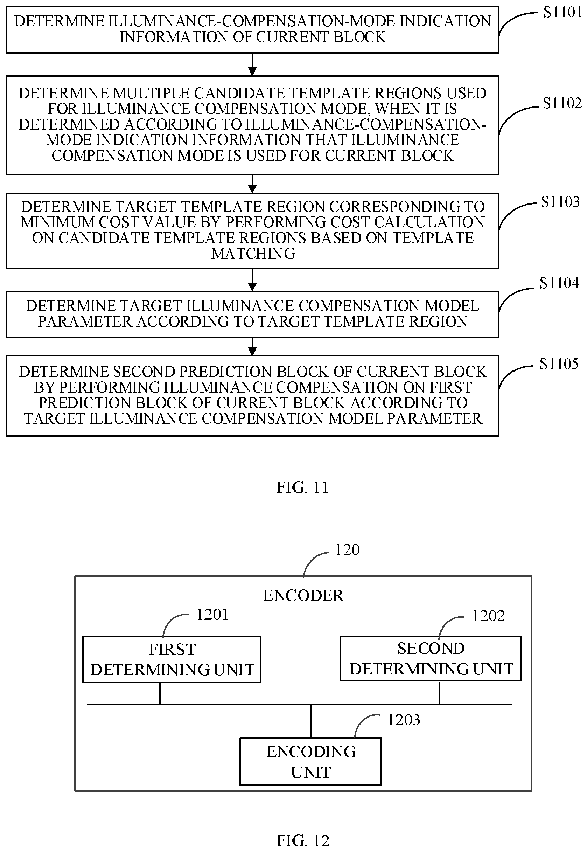

In another embodiment of the disclosure, reference is made to FIG. 11 which is a schematic flowchart of a decoding method provided in embodiments of the disclosure. As illustrated in FIG. 11, the method may include the following.

At S1101, illuminance-compensation-mode indication information of a current block is determined.

It may be noted that, the illuminance-compensation-mode indication information indicates whether an illuminance compensation mode is used for the current block. In some embodiments, the illuminance-compensation-mode indication information includes a first syntax element flag. The first syntax element flag indicates whether the illuminance compensation mode is used for the current block.

It may be noted that, the current block may be a block for any illuminance compensation mode, and the first syntax element flag may be a block-level syntax element flag. The first syntax element flag may also be a syntax element flag at a level of a picture unit where the current block is located, which indicates whether the illuminance compensation mode is used for the picture unit where the current block is located.

In some embodiments, the illuminance-compensation-mode indication information further includes a second syntax element flag. The second syntax element flag includes at least one of: a sequence-level syntax element flag indicating whether the illuminance compensation mode is enabled for a picture sequence where the current block is located; a picture-level syntax element flag indicating whether the illuminance compensation mode is enabled for a picture where the current block is located; a CTU-level syntax element flag indicating whether the illuminance compensation mode is enabled for a CTU where the current block is located; or a slice-level syntax element flag indicating whether the illuminance compensation mode is enabled for a slice where the current block is located.

It may be noted that, the second syntax element flag may be a syntax element flag at a level of a picture unit where the current block is located, which indicates whether the illuminance compensation mode is used for the picture unit where the current block is located. The picture unit may be any picture unit such as a picture sequence, a picture, a slice, or a CTU. Exemplarily, if the second syntax element flag is a sequence-level syntax element flag (represented by sps_lic_enable_flag), and it is determined according to the second syntax element flag that the illuminance compensation mode is enabled for a current picture unit, then the encoding end tries to use the illuminance compensation mode for prediction and indicates via the first syntax element flag whether the illuminance compensation mode is used for the current block. If it is determined according to the second syntax element flag that the illuminance compensation mode is disabled for the current picture unit, then the encoding end does not try to use the illuminance compensation mode for prediction.

In some embodiments, the method further includes the following. An area of the current block is determined. When the area is within a preset area range, whether the illuminance compensation mode is used is determined according to the illuminance-compensation-mode indication information of the current block. When the area is out of the preset area range, it is determined that the illuminance compensation mode is not used for the current block.

It may be noted that, if the area of the current block does not satisfy a preset area condition, it is determined that the illuminance compensation mode is not used for the current block, and in this case, the encoding end does not try to use the illuminance compensation mode for prediction. If the area of the current block satisfies the preset area condition, the encoding end tries to use the illuminance compensation mode for prediction.

In some embodiments, the preset area range includes: the area of the current block being greater than a first area threshold and less than a second area threshold. Alternatively, the preset area range includes: the area of the current block being greater than the first area threshold. Exemplarily, if a region area of the current block is greater than threshold 1 (i.e., 32 samples) and the region area of the current block is less than threshold 2 (i.e., 256 samples), then the encoding end tries an LIC prediction method. Alternatively, if the region area of the current block is greater than threshold 1 (i.e., 32 samples), then the encoding end tries the LIC prediction method.

It may be further noted that, if the area of the current block satisfies the preset area condition, and it is determined according to the second syntax element flag that the illuminance compensation mode is enabled for a current picture unit, then the encoding end tries to use the illuminance compensation mode for prediction.

In some embodiments, the illuminance-compensation-mode indication information of the current block is determined as follows. A bitstream is decoded to determine the illuminance-compensation-mode indication information of the current block. That is to say, the illuminance-compensation-mode indication information of the current block is obtained by decoding the bitstream, so as to determine whether the illuminance compensation mode is used for the current block to perform illuminance compensation on a prediction block.

In some embodiments, the method specifically includes the following. The bitstream is decoded to determine prediction-mode indication information of the current block. When it is determined according to the prediction-mode indication information that a prediction mode for the current block is a first-type prediction mode, the bitstream is decoded to determine the illuminance-compensation-mode indication information of the current block.

It may be noted that, when the prediction mode for the current block is the first-type prediction mode, the illuminance-compensation-mode indication information of the current block is obtained by decoding the bitstream. Exemplarily, the first-type prediction mode includes an inter AMVP mode, a normal inter mode, or the like.

In some other embodiments, the illuminance-compensation-mode indication information of the current block is determined as follows. An index of motion information of the current block is determined. Illuminance-mode indication information of a reference block of the current block is determined according to the index of the motion information. The illuminance-mode indication information of the reference block is determined as the illuminance-compensation-mode indication information of the current block. It may be noted that, the index of the motion information is used for indexing the motion information of the current block, to determine the reference block of the current block. Since each motion information contains usage flags of all available technologies including an illuminance compensation usage flag, whether the illuminance compensation mode is used for the current block may be determined through inheritance of neighbouring information. In some embodiments, the motion information may be an inter MV or an intra BV.

In some embodiments, the index of the motion information of the current block is specifically determined as follows. A bitstream is decoded to determine prediction-mode indication information of the current block. When it is determined according to the prediction-mode indication information that a prediction mode for the current block is a second-type prediction mode, the bitstream is decoded to determine the index of the motion information of the current block.

It may be noted that, when the prediction mode for the current block is the second-type prediction mode, the index of the motion information is decoded at the decoding end, and illuminance-compensation-mode indication information of a corresponding reference block is inherited for the current block. Exemplarily, the second-type prediction mode includes an inter merge mode, etc. It may be further noted that for the inter merge mode, whether to use LIC may not be determined through inheritance of neighbouring information of a reference picture, and instead through encoding decision-making, whether to use LIC may be transmitted to the decoding end in the form of a flag and an index. Then, the decoding end parses a flag indicating whether to use LIC in a merge mode to determine whether LIC technology is used for the current block, and parses the index to determine motion information.

In some other embodiments, the index of the motion information of the current block is specifically determined as follows. A motion information candidate list is constructed, and an index of the first motion information in the motion information candidate list is determined.

At S1102, when it is determined according to the illuminance-compensation-mode indication information that an illuminance compensation mode is used for the current block, multiple candidate template regions used for the illuminance compensation mode are determined.

In some embodiments, the multiple candidate template regions used for the illuminance compensation mode are determined as follows. The multiple candidate template regions are determined according to reconstructed at least two sub-template regions.

It may be noted that, the sub-template region is a reconstructed region adjacent to or non-adjacent to the current block and a reference block of the current block. In some embodiments, the sub-template region includes at least one of: a top sub-template region, a top-right sub-template region, a left sub-template region, a bottom-left sub-template region, or a top-left sub-template region. Candidate template regions are obtained by one sub-template region or combining more than two sub-template regions, and further, a target template region of the current block is determined from the candidate template regions.

In some embodiments, the sub-template region includes the top sub-template region and the left sub-template region. The multiple candidate template regions are determined according to the reconstructed at least two sub-template regions as follows. A first candidate template region is determined according to the top sub-template region and the left sub-template region, a second candidate template region is determined according to the left sub-template region, and a third candidate template region is determined according to the top sub-template region, as illustrated in FIG. 8A to FIG. 8C.

In some other embodiments, the sub-template region further includes the top-right sub-template region and the bottom-left sub-template region. A fourth candidate template region is determined according to the top sub-template region and the top-right sub-template region, and a fifth candidate template region is determined according to the left sub-template region and the bottom-left sub-template region, as illustrated in FIG. 8D and FIG. 8E.

It may be noted that for using a template region obtained by combining more than two sub-template regions, because of a larger number of samples, in some cases, there are more available samples for model parameter calculation compared with a mode in which only the top template region or the left template region is used, and the model accuracy may also be higher. Therefore, the accuracy of model parameter calculation can be improved by: 1, increasing the number of samples for model parameter calculation, and 2, expanding an area of a template region to obtain broader and more spatial information.

For 1, the number of samples may be increased by using a sampling method with a reduced sampling step, and even all available samples in a template region may be selected for calculating linear model parameters.

For 2, the template region may be directly expanded. For example, for the top template region, a template height remains unchanged, and a width of the template region is increased. For the left template region, a template width remains unchanged, and a height of the template region is increased. FIG. 8D illustrates expansion of a top template region, and FIG. 8E illustrates expansion of a left template region.

It may be further noted that in other cases, if a template region obtained by combining more than two sub-template regions is used, too many samples may instead affect the model accuracy. In such cases, spatial information may be restricted by reducing the number of samples for model parameter calculation or reducing an area of a template region, thereby improving the accuracy of model parameter calculation.

In embodiments of the disclosure, different types of template regions are set to contain different samples and different spatial information, and both the encoding end and the decoding end jointly decide an optimal template region for calculating a model parameter, where the optimal template region contains the maximum useful information required for the current block. As such, the accuracy of model parameter calculation can be improved.

It may be noted that, a method for combining the sub-template regions is merely taken as an example for illustration herein. In addition to the above five candidate template regions, different numbers of sub-template regions and different types of sub-template regions may also be combined into candidate template regions of more shapes, which will not be repeated herein.

In some embodiments, the method further includes the following. A height of the candidate template region is determined according to a height of the current block. A width of the candidate template region is determined according to a width of the current block. Exemplarily, as illustrated in FIG. 9, a height H1 of a current block is correlated with a height H2 of a top sub-template region, and a width W1 of the current block is correlated with a width W2 of a left sub-template region. Specifically, the correlation may be positive, i.e., the greater the height of the current block, the greater the height of the top sub-template region, and the greater the width of the current block, the greater the width of the left sub-template region.

In some embodiments, the method further includes the following. It is determined that a height of the candidate template region is a first value preset. It is determined that a width of the candidate template region is a second value preset. The first value is greater than or equal to 1, and the second value is greater than or equal to 1. It may be noted that, a size of the candidate template region may also be a preset size, and the first value and the second value each represent the number of samples. Exemplarily, the first value and the second value each are 1, which indicates that template regions include one row of top neighbouring samples and one column of left neighbouring samples of the current block as well as one row of top neighbouring samples and one column of left neighbouring samples of the reference block. The first value and the second value each are 2, which indicates that template regions include two rows of top neighbouring samples and two columns of left neighbouring samples of the current block as well as two rows of top neighbouring samples and two columns of left neighbouring samples of the reference block.

In some embodiments, the method further includes the following. When the height of the current block is within a first height range, it is determined that the height of the candidate template region is a first candidate height value. When the height of the current block is within a second height range, it is determined that the height of the candidate template region is a second candidate height value. When the width of the current block is within a first width range, it is determined that the width of the candidate template region is a first candidate width value. When the width of the current block is within a second width range, it is determined that the width of the candidate template region is a second candidate width value.

In some embodiments, the method further includes the following. Whether both a first sub-template region of the current block and a first sub-template region of a reference block are available is detected. If both the first sub-template region of the current block and the first sub-template region of the reference block are available, the candidate template region is determined based on the first sub-template region. If the first sub-template region of the current block and/or the first sub-template region of the reference block is unavailable, the first sub-template region is ignored.

It may be noted that for the selection of the candidate template region, boundary check may be introduced, and for a sub-template region in which no sample is available, this sub-region is not used for calculating model parameters. Exemplarily, for the left boundary of a picture, none of a left sub-template region, a bottom-left sub-template region, and a top-left sub-template region is available. For the top boundary of the picture, none of a top sub-template region, a top-right sub-template region, and the top-left sub-template region is available.

At S1103, a target template region corresponding to a minimum cost value is determined by performing cost calculation on the candidate template regions based on template matching.

In embodiments of the disclosure, a cost function for cost calculation may be SAD, SATD, MSE, SSD, MAD, MSD, absolute value of transform coefficients (e.g., DCT coefficients), NCC, or the like, which is not specifically limited herein.

In some embodiments, the target template region corresponding to the minimum cost value is determined by performing cost calculation on the candidate template regions based on template matching as follows. A template region of the current block and a template region of a reference block are determined according to the candidate template regions. Candidate illuminance compensation model parameters corresponding to the candidate template regions are determined according to a first reconstructed sample in the template region of the current block and a second reconstructed sample in the template region of the reference block. A first prediction sample in the template region of the current block is determined according to the candidate illuminance compensation model parameters. First cost values of the candidate template regions are determined by performing cost calculation according to a third reconstructed sample and the first prediction sample in the template region of the current block. The target template region corresponding to the minimum cost value is determined according to the first cost values.

In some embodiments, an illuminance model is a linear model constructed based on a linear function, and an illuminance compensation model parameter includes at least one of: a scaling parameter, an offset parameter, or a shift parameter. In some other embodiments, an illuminance model is a nonlinear model constructed based on a nonlinear function, and a model parameter includes any parabolic equation parameter and a shift parameter.

In some embodiments, a reconstructed sample in the template region of the reference block is a motion-compensated reconstructed sample or a sample that is not motion-compensated. Exemplarily, the motion compensation may specifically be interpolation filtering.

In some embodiments, the first prediction sample in the template region of the current block is determined according to the candidate illuminance compensation model parameter as follows. The candidate illuminance compensation model parameter is applied to a fourth reconstructed sample in the template region of the reference block, to determine the first prediction sample in the template region of the current block. Specifically, an illuminance compensation model is constructed according to the candidate illuminance compensation model parameter, and the fourth reconstructed sample is input to the illuminance compensation model for illuminance compensation, to output the first prediction sample.

It may be noted that, the first reconstructed sample is a reconstructed sample for model parameter calculation in the template region of the current block, the second reconstructed sample is a reconstructed sample for model parameter calculation in the template region of the reference block, the third reconstructed sample is a reconstructed sample for calculating the first cost value in the template region of the current block, and the fourth reconstructed sample is a reconstructed sample for calculating the first prediction sample in the template region of the reference block. The first reconstructed sample and the second reconstructed sample may be the same sample or different samples in the template region of the current block. The second reconstructed sample and the fourth reconstructed sample may be the same sample or different samples in the template region of the reference block.

In some embodiments, the first reconstructed sample is determined by sampling a first template region in the template region of the current block. The second reconstructed sample is determined by sampling a first template region in the template region of the reference block. The third reconstructed sample is determined by sampling a second template region in the template region of the current block. The fourth reconstructed sample is determined by sampling a second template region in the template region of the reference block.

In some embodiments, part of reconstructed samples are collected from the first template region and the second template region according to a sampling step preset. The sampling step may be correlated with a template size. Exemplarily, if at least one of the width or the height of the current block is equal to 4, 4 reconstructed samples are selected from top neighbouring reconstructed samples of a CU and 4 reconstructed samples are selected from left neighbouring reconstructed samples of the CU. For example, if the current block has a width of 16 and a height of 4, all the 4 left neighbouring reconstructed samples are selected, and 4 top neighbouring reconstructed samples are selected at a step of 3. If neither the width nor the height of the current block is equal to 4, samples whose quantity is the logarithm of the minimum between the width and the height to 2 are obtained from the top neighbouring reconstructed samples, and samples whose quantity is the logarithm of the minimum between the width and the height to 2 are obtained from the left neighbouring reconstructed samples.

In some other embodiments, all of reconstructed samples are collected from the first template region and the second template region.

In some embodiments, the first template region is non-adjacent to the current block and the reference block of the current block, and the second template region is adjacent to the current block and the reference block of the current block. The first template region does not overlap with the second template region, or the first template region partially overlaps with the second template region.

It may be noted that, a reconstructed sample for calculating a model parameter is obtained from the first template region, and a reconstructed sample for calculating a cost value is obtained from the second template region. When the first template region is different from the second template region, it may mean that a template prediction method may be the same as a prediction method for the current block. That is, the second template region is used for calculating the model parameter, and the first template region is used for calculating a prediction value. The advantage of doing this is to provide a true prediction value for this model parameter on a template region.

FIG. 10 is a schematic diagram illustrating template regions of a reference picture and a current picture provided in embodiments of the disclosure. The template regions include two rows of reconstructed samples on the top of and two columns of reconstructed samples on the left of a current block as well as two rows of reconstructed samples on the top of and two columns of reconstructed samples on the left of a reference block. A first template region includes the first row of reconstructed samples and the first column of reconstructed samples, and a second template region includes the second row of reconstructed samples and the second column of reconstructed samples. During decision-making, reconstructed samples in the first row and the first column of a template are applied to calculate model parameters. The model parameters are then applied to the second row and the second column of a template region of the reference block, to obtain prediction samples in the second row and the second column of a template region of the current block. An optimal template region is decided by calculating costs according to reconstructed samples and the prediction samples in the second row and the second column of the template region of the current block.

During application, samples in the second row and second column of a template region are applied to calculate model parameters, and the model parameters are then applied to a first prediction block to obtain an illuminance-compensated second prediction block.

It may be noted that, a template region for model parameter calculation may include one row of top neighbouring samples and one column of left neighbouring reconstructed samples of the current block as well as one row of top neighbouring samples and one column of left neighbouring reconstructed samples of the reference block of the current block. Alternatively, the template region may include multiple rows of top neighbouring samples and multiple columns of left neighbouring reconstructed samples of the current block as well as multiple rows of top neighbouring samples and multiple columns of left neighbouring reconstructed samples of the reference block of the current block. Alternatively, the template region may include one or more rows of top non-neighbouring samples and one or more columns of left non-neighbouring reconstructed samples of the current block as well as one or more rows of top non-neighbouring samples and one or more columns of left non-neighbouring reconstructed samples of the reference block of the current block, which will not be enumerated herein.

In some embodiments, the first prediction sample in the template region of the current block is determined according to the candidate illuminance compensation model parameter as follows. The candidate illuminance compensation model parameter is applied to a prediction sample of the first prediction block, to determine the first prediction sample in the template region of the current block. Specifically, an illuminance compensation model is constructed according to the candidate illuminance compensation model parameter, and the prediction sample of the first prediction block is input to the illuminance compensation model for illuminance compensation, to output the first prediction sample. That is to say, model parameters may also be applied to prediction samples of the first prediction block to obtain first prediction samples in a model region of the current block, and these first prediction samples are used for calculating cost values together with reconstructed samples in the template region of the current block. Specifically, the model parameters may be applied to the first row of prediction samples and the first column of prediction samples of the first prediction block, or may be applied to the second row of prediction samples and the second column of prediction samples of the first prediction block.

In some embodiments, the method further includes the following. A second prediction sample in the template region of the current block is determined according to a reconstructed sample in the template region of the reference block. A second cost value of the candidate template region is determined by performing cost calculation according to a reconstructed sample and the second prediction sample in a current template region. When the minimum cost value is the first cost value, it is determined that the illuminance compensation mode is used for the current block. When the minimum cost value is the second cost value, it is determined that the illuminance compensation mode is not used for the current block.

Exemplarily, the reconstructed sample in the template region of the reference block is determined as the second prediction sample, or the reconstructed sample in the template region of the reference block after motion compensation is determined as the second prediction sample. The second cost value can be understood as a cost value corresponding to the current block without using the illuminance compensation mode. The minimum cost value being the first cost value indicates that the illuminance compensation mode is used, and the minimum cost value being the second cost value indicates that the illuminance compensation mode is not used.

In some embodiments, the method further includes the following. If it is determined that a prediction mode for the current block is a merge mode, the second prediction sample in the template region of the current block is determined according to the reconstructed sample in the template region of the reference block. That is to say, when the prediction mode for the current block is the merge mode, the second cost value is calculated according to the reconstructed sample in the template region of the current block and the reconstructed sample in the template region of the reference block.

It may be noted that in practical application, a second cost value corresponding to each candidate template region may be calculated, or only a second cost value corresponding to a specific template region may be calculated. Exemplarily, the specific template region may include the top sub-template region and the left template region.

It may be further noted that, the second cost value may be calculated according to all of reconstructed samples in a template region, or the second cost value may be calculated by collecting part of reconstructed samples from the template region according to a sampling step preset.

At S1104, a target illuminance compensation model parameter is determined according to the target template region.

It may be noted that, the target illuminance compensation model parameter is determined by performing model parameter calculation according to a reconstructed sample in a target template region of the current block and a reconstructed sample in a target template region of the reference block.

In some embodiments, the target illuminance compensation model parameter is determined according to the target template region as follows. The template region of the current block and the template region of the reference block is determined according to the target template region. The target illuminance compensation model parameter corresponding to the target template region is determined according to the third reconstructed sample in the template region of the current block and a fourth reconstructed sample in the template region of the reference block.

Specifically, the third reconstructed sample is determined by sampling a second template region in the template region of the current block, and the fourth reconstructed sample is determined by sampling a second template region in the template region of the reference block.

In some embodiments, an illuminance model is a linear model constructed based on a linear function, and an illuminance compensation model parameter includes at least one of: a scaling parameter, an offset parameter, or a shift parameter. In some other embodiments, an illuminance model is a nonlinear model constructed based on a nonlinear function, and a model parameter includes any parabolic equation parameter and a shift parameter.

In some other embodiments, a candidate illuminance compensation model parameter obtained during decision-making of the target template region is obtained as the target illuminance compensation model parameter. It may be noted that during decision-making and application, if the same reconstructed sample is used for calculating a model parameter, a candidate illuminance parameter obtained during decision-making of the target template region may be directly obtained without re-calculating the model parameter, thereby improving decoding efficiency.

At S1105, a second prediction block of the current block is determined by performing illuminance compensation on a first prediction block of the current block according to the target illuminance compensation model parameter.

In some embodiments, the method further includes the following. A bitstream is decoded to determine prediction-mode indication information of the current block. A target prediction mode for the current block is determined according to the prediction-mode indication information. A reference block of the current block in a reference picture is determined according to the target prediction mode. The first prediction block is determined according to the reference block.

In some embodiments, the first prediction block is determined according to the reference block as follows. If the target prediction mode is an IBC mode, the first prediction block is determined by performing block copy on the reference block. If the target prediction mode is an inter prediction mode, the first prediction block is determined by performing motion compensation on the reference block.

Further, the method further includes the following. A bitstream is decoded to determine residual information of the current block. A reconstructed block of the current block is determined according to the residual information and the second prediction block. It may be noted that, if another technology still needs to be performed on the current block, the another technology may be further performed on the second prediction block to obtain a final prediction block. Otherwise, an illuminance-compensated second prediction block is the final prediction block. The bitstream is then parsed to obtain the residual information, and temporal residual information is obtained through inverse quantization and inverse transform. The reconstructed block is obtained by adding the final prediction block and the temporal residual information.

In some embodiments, the method further includes the following. Based on a determination that the illuminance compensation mode is not used for the current block, a reconstructed block of the current block is determined according to the first prediction block and residual information. It may be noted that, if another technology still needs to be performed on the current block, the another technology may be further performed on the first prediction block to obtain a final prediction block. Otherwise, the first prediction block is the final prediction block. A bitstream is then parsed to obtain the residual information, and temporal residual information is obtained through inverse quantization and inverse transform. The reconstructed block is obtained by adding the final prediction block and the temporal residual information.

According to the above technical solution, for the illuminance compensation mode, template regions are introduced, where different types of template regions contain different samples and different spatial information. The decoding end decides an optimal template region for calculating a model parameter, where the optimal template region contains the maximum useful information. As such, the accuracy of model parameter calculation can be improved, thereby improving the illuminance compensation effect and decoding performance.

The decoding method provided in embodiments of the disclosure will be further exemplified based on the above embodiment.

In this embodiment, at the decoding end, a decoder parses or obtains an LIC enable flag. The flag is a sequence-level flag (sps_lic_enable_flag) indicating that LIC technology is enabled for the decoder currently.

1. A bitstream is parsed to obtain a prediction type for a current block. If the prediction type for the current block is an inter prediction mode, a merge usage flag of the current block is parsed.

If the merge usage flag of the current block is true, an index of a merge candidate list corresponding to the current block is parsed. For constructing the merge candidate list, MV information is obtained from neighbouring, non-neighbouring, historical, and temporal coding blocks, and usage flags of all available technologies for each merge candidate are also obtained, where the usage flags include an illuminance compensation usage flag.

If the merge usage flag of the current block is not true, sps_lic_enable_flag is true, a region area of the current block is greater than threshold 1, and the region area of the current block is less than threshold 2, then the bitstream is parsed to obtain an LIC usage flag (cu_lic_flag) of the current block.

If the usage flag cu_lic_flag of the current block is false, step 3 is performed.

It may be noted that for LIC technology in a merge mode, whether to use LIC may not be determined through inheritance of neighbouring information, and instead through decision-making at the encoding end, whether to use LIC may be transmitted to the decoding end in the form of a flag and an index. Then, the decoding end parses a usage flag of this technology in the merge mode to determine whether the LIC technology is used for a current CU.

2. A reference block in a reference picture is obtained according to an MV, and an initial prediction block is obtained through motion compensation.

Reconstructed samples on the top and left of the current block are obtained.

Reconstructed samples on the top and left of the reference block in the reference picture are obtained and motion-compensated.

Cost1: Model parameters are calculated using the reconstructed samples on the top and left of the current block and the reconstructed samples on the top and left of the reference block. The calculation process is as described in 1.2 above. Alternatively, the model parameters such as a scaling parameter $a$ and an offset parameter $b$ are obtained by means of least square error, etc. In a specific implementation, a shift parameter *shift* may also be included. These parameters are applied to the reconstructed samples on the top and left of the reference block to obtain compensated reconstructed samples on the top and left of the reference block, and SAD cost values between these compensated reconstructed samples and the reconstructed samples on the top and left of the current block are calculated and represented by cost1.

Cost2: Model parameters are calculated using only reconstructed samples on the top of the current block and reconstructed samples on the top of the reference block. The calculation process is as described in 1.2 above. Alternatively, the model parameters such as a scaling parameter $a$ and an offset parameter $b$ are obtained by means of least square error, etc. In a specific implementation, a shift parameter *shift* may also be included. These parameters are applied to the reconstructed samples on the top and left of the reference block to obtain compensated reconstructed samples on the top and left of the reference block, and SAD cost values between these compensated reconstructed samples and the reconstructed samples on the top and left of the current block are calculated and represented by cost2.

Cost3: Model parameters are calculated using only reconstructed samples on the left of the current block and reconstructed samples on the left of the reference block. The calculation process is as described in 1.2 above. Alternatively, the model parameters such as a scaling parameter $a$ and an offset parameter $b$ are obtained by means of least square error, etc. In a specific implementation, a shift parameter *shift* may also be included. These parameters are applied to the reconstructed samples on the top and left of the reference block to obtain compensated reconstructed samples on the top and left of the reference block, and SAD cost values between these compensated reconstructed samples and the reconstructed samples on the top and left of the current block are calculated and represented by cost3.

Decision: SAD cost values of different template regions are compared, and a template region corresponding to a minimum cost is determined as a region for calculating an illuminance compensation model for the current block. Model parameters of the current block are calculated according to samples in the determined template region, with the same calculation process as that in the above, so as to obtain a scaling parameter $a$, an offset parameter $b$, and a shift parameter *shift*, etc. These parameters are applied to the initial prediction block to obtain an illuminance-compensated prediction block.

In some embodiments, a cost value for which the illuminance compensation mode is not used may also be calculated. If a current inter prediction mode is Merge, SAD cost values between the reconstructed samples on the top and left of the current block and motion-compensated reconstructed samples on the top and left of the reference block are calculated and represented by cost0. During decision-making, the SAD cost values are compared. If cost0 is a minimum cost value, it indicates that illuminance compensation technology is not applicable to the current block, and thus illuminance compensation is not performed on the current block. Otherwise, a template region corresponding to a minimum cost is determined as a region for calculating an illuminance compensation model for the current block.

It may be noted that, a template region for model parameter calculation may include one row of top neighbouring reconstructed samples and one column of left neighbouring reconstructed samples of the current block as well as one row of top neighbouring reconstructed samples and one column of left neighbouring reconstructed samples of the reference block of the current block. Alternatively, the template region may include multiple rows of top neighbouring samples and multiple columns of left neighbouring reconstructed samples of the current block as well as multiple rows of top neighbouring samples and multiple columns of left neighbouring reconstructed samples of the reference block of the current block. Alternatively, the template region may include multiple rows of top non-neighbouring samples and multiple columns of left non-neighbouring reconstructed samples of the current block as well as multiple rows of top non-neighbouring samples and multiple columns of left non-neighbouring reconstructed samples of the reference block of the current block, which will not be enumerated herein.

It may be further noted that, the model parameters are applied to a template region of the reference block to obtain illuminance-compensated reconstructed samples, and these samples are used for calculating SAD cost values together with the reconstructed samples on the top and left of the current block. The model parameters may also be applied to the first row and the first column of a motion-compensated first prediction block to obtain one row and one column of compensated prediction samples, and these samples are used for calculating SAD cost values together with the reconstructed samples on the top and left of the current block.

3. If another technology still needs to be performed on the current block, the another technology may be further performed to obtain a final prediction block. Otherwise, an illuminance-compensated prediction block is the final prediction block.

4. The bitstream is parsed to obtain residual information, and temporal residual information is obtained through inverse quantization and inverse transform. A reconstructed sample block is obtained by adding the final prediction block and the temporal residual information.

5. After all reconstructed sample blocks are processed by in-loop filtering or other technologies, a final reconstructed picture is obtained, which can be implemented as a video output or as a reference for subsequent decoding.

The encoding/decoding method provided in embodiments of the disclosure is applied in the inter prediction at the encoding/decoding end. After the above embodiments (excluding the calculation of cost0) are integrated into the latest ECM10.0, test results under the common test conditions of random access (RA) and low delay B (LDB) are illustrated below.

Table 1

| | Random Access Main10 | | | | |
|---|---|---|---|---|---|
| | Over ECM10.0 | | | | |
| | Y | U | V | EncT | DecT |
| Class A1<br>Class A2<br>Class B<br>Class C<br>Class E | <br><br>0.01%<br>-0.02% | <br><br>-0.03%<br>0.13% | <br><br>-0.23%<br>0.15% | <br><br>102.1%<br>101.1% | <br><br>101.4%<br>101.4% |
| **Overall** | | | | | |
| Class D | 0.00% | -0.10% | -0.11% | 101.0% | 100.0% |
| Class F | -0.02% | -0.02% | 0.10% | 100.7% | 101.4% |
| Class TGM | | | | | |

Table 2

| | Low delay B Main10 | | | | |
|---|---|---|---|---|---|
| | Over ECM10.0 | | | | |
| | Y | U | V | EncT | DecT |
| Class A1<br>Class A2<br>Class B<br>Class C<br>Class E | <br><br><br>-0.09%<br>-0.12% | <br><br><br>0.12%<br>-0.06% | <br><br><br>0.13%<br>-0.24% | <br><br><br>102.9%<br>102.1% | <br><br><br>102.9%<br>101.6% |
| **Overall** | | | | | |
| Class D | 0.00% | -0.73% | 0.62% | 102.8% | 99.9% |
| Class F | 0.08% | -0.12% | -0.39% | 101.8% | 100.7% |
| Class TGM | | | | | |

A negative number represents a performance gain, i.e., the number of bits decreases under the same quality. According to simulation results, this technology basically achieves no performance gain under the test conditions of RA but demonstrates significant compression performance gains under the test conditions of LDB. Since only classes B, C, and E are included in the test results under the test conditions of LDB, the current results show an approximately 0.1% improvement in compression efficiency for luma components.

As above mentioned, it is proposed in embodiments of the disclosure that both the encoding end and the decoding end jointly decide a template region for calculating a model parameter and the template region is expanded. Based on the LIC technology, by introducing other template region modes for calculating the model parameter, different template regions can involve more samples and more spatial information in the calculation of the model parameters.

A bitstream is further provided in embodiments of the disclosure. The bitstream is generated by performing bit encoding according to information to-be-encoded. The information to-be-encoded includes at least one of: illuminance-compensation-mode indication information, prediction-mode indication information, an index of motion information, or residual information of a current block.

In yet another embodiment of the disclosure, based on the same inventive concept of the foregoing embodiments, reference is made to FIG. 12 which is a schematic structural diagram of an encoder provided in embodiments of the disclosure. As illustrated in FIG. 12, the encoder 120 may include a first determining unit 1201, a second determining unit 1202, and an encoding unit 1203. The first determining unit 1201 is configured to determine multiple candidate template regions used for an illuminance compensation mode. The first determining unit 1201 is configured to determine a target template region corresponding to a minimum cost value by performing cost calculation on the candidate template regions based on template matching. The first determining unit 1202 is configured to determine a target illuminance compensation model parameter according to the target template region. The second determining unit 1202 is configured to determine a second prediction block of a current block by performing illuminance compensation on a first prediction block of the current block according to the target illuminance compensation model parameter. The second determining unit 1202 is configured to determine illuminance-compensation-mode indication information of the current block by making encoding decision on the illuminance compensation mode according to the second prediction block. The encoding unit 1203 is configured to encode the illuminance-compensation-mode indication information, and signal obtained encoded bits in a bitstream.

It may be understood that, functional units of the encoder also perform the encoding method described in any one of the foregoing embodiments.

It may be understood that in embodiments of the disclosure, the "unit" may be part of the circuitry, part of the processor, part of the program or software, etc., and of course may also be a module, or may be non-modular. In addition, various components described in embodiments of the disclosure may be integrated into one processing unit or may be present as a number of physically separated units, or two or more units may be integrated into one. The integrated unit may take the form of hardware or a software functional module.

If the integrated unit is implemented as a software functional module and not sold or used as a stand-alone product, the integrated unit may be stored in a computer-readable storage medium. Based on such understanding, the technical solution of the embodiments in essential, or a part that contributes to the prior art, or all or part of the technical solution, may be embodied in the form of a software product. The computer software product is stored in a storage medium and includes a number of instructions to enable a computer device (which may be a personal computer, a server, or a network device, etc.) or processor to perform all or part of the operations of the method described in the embodiments. The aforementioned storage medium includes a USB stick, a removable hard disk, a read only memory (ROM), a random access memory (RAM), a diskette or a CD-ROM, and other media that may store program codes.

Thus, embodiments of the disclosure provide a computer-readable storage medium, which is applied to the encoder 120 and stores a computer program, the computer program implementing the method described in any one of the foregoing embodiments when executed by the first processor.

Embodiments of the disclosure further provide a computer-readable storage medium. The computer-readable storage medium is configured to store a bitstream generated according to the encoding method described in any one of the foregoing embodiments. The bitstream is generated by performing bit encoding according to information to-be-encoded. The information to-be-encoded includes at least one of: illuminance-compensation-mode indication information, prediction-mode indication information, an index of motion information, or residual information of a current block.

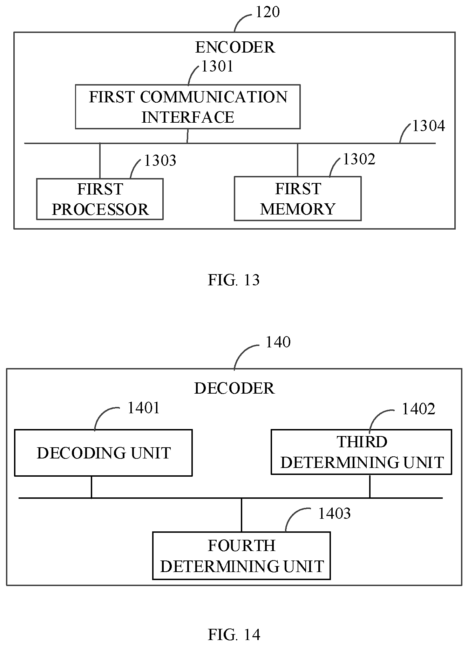

Based on the structure of the encoder 120 and the computer-readable storage medium, reference is made to FIG. 13 which is a schematic diagram of a specific hardware structure of the encoder 120 provided in embodiments of the disclosure. As illustrated in FIG. 13, the encoder 120 may include a first communication interface 1301, a first memory 1302, and a first processor 1303. The components are coupled together via a first bus system 1304. It may be understood that the first bus system 1304 is configured to enable connection and communication between these components. The first bus system 1304 includes a power bus, a control bus, and a status signal bus in addition to a data bus. For the sake of clarity, however, the various buses are labelled as the first bus system 1304 in FIG. 13.

The first communication interface 1301 is configured to receive and transmit signals during information transmission with other external network elements.

The first memory 1302 is configured to store a computer program executable by the first processor 1303.

The first processor 1303 is configured to, when executing the computer program, determine multiple candidate template regions used for an illuminance compensation mode; determine a target template region corresponding to a minimum cost value by performing cost calculation on the candidate template regions based on template matching; determine a target illuminance compensation model parameter according to the target template region; determine a second prediction block of a current block by performing illuminance compensation on a first prediction block of the current block according to the target illuminance compensation model parameter; determine illuminance-compensation-mode indication information of the current block by making encoding decision on the illuminance compensation mode according to the second prediction block; and encode the illuminance-compensation-mode indication information, and signal obtained encoded bits in a bitstream.

It will be appreciated that the first memory 1302 in embodiments of the disclosure may be a transitory memory or non-transitory memory, or may include both transitory and non-transitory memory. In particular, the non-transitory memory may be an ROM, a programmable ROM (PROM), an erasable PROM (EPROM), an electrically EPROM (EEPROM), or a flash memory. The transitory memory may be an RAM, which is used as an external cache. By way of illustration, but not limitation, many forms of RAM are available, such as a static RAM (SRAM), a dynamic RAM (DRAM), a synchronous DRAM (SDRAM), a double data rate synchronous random access memory (DDRSDRAM), an enhanced SDRAM (ESDRAM), a synchlink DRAM (SLDRAM), and a direct Rambus RAM (DRRAM). The first memory 1302 of the system and method described in this disclosure is intended to include, but is not limited to, these and any other suitable types of memory.

The first processor 1303 may be an integrated circuit chip with signal processing capabilities. During implementation, the operations in the above method may be accomplished by integrated logic circuitry in the hardware of the first processor 1303 or by instructions in the form of software. The first processor 1303 described above may be a general-purpose processor, a digital signal processor (DSP), an application specific integrated circuit (ASIC), a field programmable gate array (FPGA), or other programmable logic device, discrete gate or transistor logic device, discrete hardware component. The various methods, steps and logic block diagrams disclosed in embodiments of the disclosure may be implemented or performed. The general-purpose processor may be a microprocessor or the processor may also be any conventional processor, etc. The operations in the method disclosed in conjunction with embodiments of the disclosure may be performed directly by the hardware decoder processor or by a combination of hardware and software modules in the decoder processor. The software module may be located in a random memory, flash memory, read-only memory, programmable read-only memory or electrically erasable programmable memory, registers and other storage media mature in the art. The storage medium is located in the first memory 1302, and the first processor 1303 reads the information in the first memory 1302 and completes the operations of the above method in combination with its hardware.

It will be appreciated that these embodiments described in this disclosure may be implemented in hardware, software, firmware, middleware, microcode, or combinations thereof. For hardware implementations, the processing unit may be implemented in one or more ASIC, DSP, DSP device (DSPD), programmable logic device (PLD), FPGA, general-purpose processor, controller, microcontroller, microprocessor, other electronic unit for performing the functions described in this disclosure, or a combination thereof. For software implementations, the technology described in this disclosure may be implemented by means of modules (e.g. procedures, functions, etc.) that perform the functions described in this disclosure. The software code may be stored in a memory and executed by a processor. The memory may be implemented in the processor or outside the processor.

Optionally, as another embodiment, the first processor 1303 is further configured to perform the method described in any one of the foregoing embodiments when executing the computer program.

An encoder is provided in this embodiment. In the encoder, for the illuminance compensation mode, template regions are introduced, where different types of template regions contain different samples and different spatial information. Both the encoding end and the decoding end jointly decide an optimal template region for calculating a model parameter, where the optimal template region contains the maximum useful information. As such, the accuracy of model parameter calculation can be improved, thereby improving the illuminance compensation effect and coding performance.

In still another embodiment of the disclosure, based on the same inventive concept of the foregoing embodiments, reference is made to FIG. 14 which is a schematic structural diagram of a decoder 140 provided in embodiments of the disclosure. As illustrated in FIG. 14, the decoder 140 may include a decoding unit 1401, a third determining unit 1402, and a fourth determining unit 1403. The decoding unit 1401 is configured to determine illuminance-compensation-mode indication information of a current block. The third determining unit 1402 is configured to determine multiple candidate template regions used for an illuminance compensation mode, when it is determined according to the illuminance-compensation-mode indication information that the illuminance compensation mode is used for the current block. The third determining unit 1402 is configured to determine a target template region corresponding to a minimum cost value by performing cost calculation on the candidate template regions based on template matching. The fourth determining unit 1403 is configured to determine a target illuminance compensation model parameter according to the target template region. The fourth determining unit 1403 is configured to determine a second prediction block of the current block by performing illuminance compensation on a first prediction block of the current block according to the target illuminance compensation model parameter.

It may be understood that, functional units of the decoder also perform the decoding method described in any one of the foregoing embodiments.

Based on the structure of the decoder 140 and the computer-readable storage medium, reference is made to FIG.

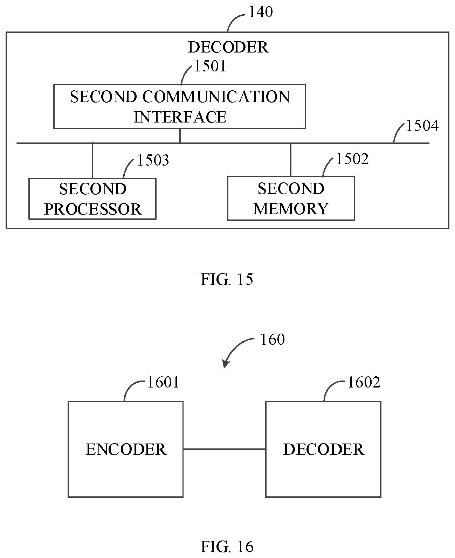

15 which is a schematic diagram of a specific hardware structure of the decoder 140 provided in embodiments of the disclosure. As illustrated in FIG. 15, the decoder 140 may include a second communication interface 1501, a second memory 1502, and a second processor 1503. The components are coupled together via a second bus system 1504. It may be understood that the second bus system 1504 is configured to enable connection and communication between these components. The second bus system 1504 includes a power bus, a control bus, and a status signal bus in addition to a data bus. For the sake of clarity, however, the various buses are labelled as second bus system 1504 in FIG. 15.

The second communication interface 1501 is configured to receive and transmit signals during information transmission with other external network elements.

The second memory 1502 is configured to store a computer program executable by the second processor 1503.

The second processor 1503 is configured to, when executing the computer program, determine illuminance-compensation-mode indication information of a current block; determine multiple candidate template regions used for an illuminance compensation mode, when it is determined according to the illuminance-compensation-mode indication information that the illuminance compensation mode is used for the current block; determine a target template region corresponding to a minimum cost value by performing cost calculation on the candidate template regions based on template matching; determine a target illuminance compensation model parameter according to the target template region; and determine a second prediction block of the current block by performing illuminance compensation on a first prediction block of the current block according to the target illuminance compensation model parameter.

Optionally, as another embodiment, the second processor 1503 is further configured to perform the method described in any one of the foregoing embodiments when executing the computer program.

It may be understood that, in terms of hardware function, the second memory 1502 is similar to the first memory 1302, and the second processor 1503 is similar to the first processor 1303, which will not be elaborated herein.

A decoder is provided in this embodiment. In the decoder, for the illuminance compensation mode, template regions are introduced, where different types of template regions contain different samples and different spatial information. Both the encoding end and the decoding end jointly decide an optimal template region for calculating a model parameter, where the optimal template region contains the maximum useful information. As such, the accuracy of model parameter calculation can be improved, thereby improving the illuminance compensation effect and decoding performance.

In still another embodiment of the disclosure, reference is made to FIG. 16 which is a schematic structural diagram of a coding system provided in embodiments of the disclosure. As illustrated in FIG. 16, the coding system 160 may include an encoder 1601 and a decoder 1602.

In embodiments of the disclosure, the encoder 1601 may be an encoder described in any one of the foregoing embodiments, and the decoder 1602 may be a decoder described in any one of the foregoing embodiments.

It may be noted that in this disclosure, the terms "include", "comprise" or any other variant thereof are intended to cover non-exclusive inclusion, such that a process, method, article, or apparatus including a range of elements includes not only those elements, but also includes other elements that are not explicitly listed or are also inherent to such a process, method, article, or apparatus. Without further limitation, an element qualified by the statement "including a..." does not preclude the existence of another identical element in the process, method, article, or apparatus including that element.

The above serial numbers of the embodiments of the disclosure are for descriptive purposes only and do not represent the merits of the embodiments.

The methods disclosed in the several method embodiments provided in this disclosure may be combined in any way to obtain new method embodiments without conflict. The features disclosed in the several product embodiments provided in this disclosure may be combined in any way to obtain new product embodiments without conflict. The features disclosed in several method or apparatus embodiments provided in this disclosure may be combined in any way to obtain new method embodiments or apparatus embodiments without conflict.

The foregoing is only a specific implementation of the disclosure, but the protection scope of the disclosure is not limited thereto, and any variation or substitution readily conceivable by any person skilled in the art within the technical scope disclosed in the present disclosure shall be covered by the protection scope of the disclosure. Accordingly, the protection scope of this disclosure shall be governed by the protection scope of the stated claims.

## INDUSTRIAL APPLICABILITY

An encoding method, a decoding method, a bitstream, an encoder, a decoder, and a storage medium are provided in embodiments of the disclosure. At the encoding/decoding end, multiple candidate template regions used for an illuminance compensation mode for a current block are determined. A target template region corresponding to a minimum cost value is determined by performing cost calculation on the multiple candidate template regions based on template matching. A target illuminance compensation model parameter is determined according to the target template region. A second prediction block of a current block is determined by performing illuminance compensation on a first prediction block of the current block according to the target illuminance compensation model parameter. In this way, for the illuminance compensation mode, template regions are introduced, where different types of template regions contain different samples and different spatial information. Both the encoding end and the decoding end jointly decide an optimal template region for calculating a model parameter, where the optimal template region contains the maximum useful information. As such, the accuracy of model parameter calculation can be improved, thereby improving the illuminance compensation effect and coding performance.

**Claims**

1. A decoding method, applied to a decoder and comprising:

    determining illuminance-compensation-mode indication information of a current block;
    determining a plurality of candidate template regions used for an illuminance compensation mode, in response to determining, according to the illuminance-compensation-mode indication information, that the illuminance compensation mode is used for the current block;
    determining a target template region corresponding to a minimum cost value by performing cost calculation on the candidate template region based on template matching;
    determining a target illuminance compensation model parameter according to the target template region; and
    determining a second prediction block of the current block by performing illuminance compensation on a first prediction block of the current block according to the target illuminance compensation model parameter.

2. The method of claim 1, wherein determining the plurality of candidate template regions used for the illuminance compensation mode comprises:
    determining the plurality of candidate template regions according to reconstructed at least two sub-template regions.

3. The method of claim 2, further comprising:

    detecting whether both a first sub-template region of the current block and a first sub-template region of a reference block are available;
    determining the candidate template region based on the first sub-template region, in response to both the first sub-template region of the current block and the first sub-template region of the reference block being available; and
    ignoring the first sub-template region, in response to the first sub-template region of the current block and/or the first sub-template region of the reference block being unavailable.

4. The method of claim 2, wherein the sub-template region comprises at least one of: a top sub-template region, a top-right sub-template region, a left sub-template region, a bottom-left sub-template region, or a top-left sub-template region.

5. The method of claim 4, wherein determining the plurality of candidate template regions according to the reconstructed at least two sub-template regions comprises:

    determining a first candidate template region according to the top sub-template region and the left sub-template region;
    determining a second candidate template region according to the left sub-template region; and
    determining a third candidate template region according to the top sub-template region.

6. The method of claim 2, further comprising:

    determining a height of the candidate template region according to a height of the current block; and
    determining a width of the candidate template region according to a width of the current block.

7. The method of claim 2, further comprising:

    determining that a height of the candidate template region is a first value preset; and
    determining that a width of the candidate template region is a second value preset;
    wherein the first value is greater than or equal to 1, and the second value is greater than or equal to 1.

8. The method of claim 1, wherein determining the target template region corresponding to the minimum cost value by performing cost calculation on the candidate template region based on template matching comprises:

determining a template region of the current block and a template region of a reference block according to the candidate template region;
determining a candidate illuminance compensation model parameter corresponding to the candidate template region according to a first reconstructed sample in the template region of the current block and a second reconstructed sample in the template region of the reference block;
determining a first prediction sample in the template region of the current block according to the candidate illuminance compensation model parameter;
determining a first cost value of the candidate template region by performing cost calculation according to a third reconstructed sample and the first prediction sample in the template region of the current block; and
determining the target template region corresponding to the minimum cost value according to the first cost value.

9. The method of claim 8, wherein a reconstructed sample in the template region of the reference block is a motion-compensated reconstructed sample.

10. The method of claim 8, wherein determining the first prediction sample in the template region of the current block according to the candidate illuminance compensation model parameter comprises:
applying the candidate illuminance compensation model parameter to a fourth reconstructed sample in the template region of the reference block, to obtain the first prediction sample in the template region of the current block.

11. The method of claim 10, further comprising:

determining the first reconstructed sample by sampling a first template region in the template region of the current block;
determining the second reconstructed sample by sampling a first template region in the template region of the reference block;
determining the third reconstructed sample by sampling a second template region in the template region of the current block; and
determining the fourth reconstructed sample by sampling a second template region in the template region of the reference block.

12. The method of claim 11, wherein the first template region is non-adjacent to the current block and the reference block of the current block, and the second template region is adjacent to the current block and the reference block of the current block;
wherein the first template region does not overlap with the second template region, or the first template region partially overlaps with the second template region.

13. The method of claim 8, wherein determining the first prediction sample in the template region of the current block according to the candidate illuminance compensation model parameter comprises:
applying the candidate illuminance compensation model parameter to a prediction sample of the first prediction block, to obtain the first prediction sample in the template region of the current block.

14. The method of claim 8, further comprising:

determining a second prediction sample in the template region of the current block according to a reconstructed sample in the template region of the reference block;
determining a second cost value of the candidate template region by performing cost calculation according to a reconstructed sample and the second prediction sample in a current template region;
determining that the illuminance compensation mode is used for the current block, in response to the minimum cost value being the first cost value; and
determining that the illuminance compensation mode is not used for the current block, in response to the minimum cost value being the second cost value.

15. The method of claim 14, further comprising:
determining the second prediction sample in the template region of the current block according to the reconstructed sample in the template region of the reference block, in response to determining that a prediction mode for the current block is a merge mode.

16. The method of claim 14, further comprising:
based on a determination that the illuminance compensation mode is not used for the current block, determining a reconstructed block of the current block according to the first prediction block and residual information.

17. The method of claim 8, wherein determining the target illuminance compensation model parameter according to the target template region comprises:

determining the template region of the current block and the template region of the reference block according to the target template region; and
determining the target illuminance compensation model parameter corresponding to the target template region according to the third reconstructed sample in the template region of the current block and a fourth reconstructed sample in the template region of the reference block.

18. The method of any one of claims 1 to 17, wherein an illuminance compensation model is a linear model constructed based on a linear function, and an illuminance compensation model parameter comprises at least one of: a scaling parameter, an offset parameter, or a shift parameter.

19. The method of claim 1, wherein determining the illuminance-compensation-mode indication information of the current block comprises:
decoding a bitstream to determine the illuminance-compensation-mode indication information of the current block.

20. The method of claim 19, wherein decoding the bitstream to determine the illuminance-compensation-mode indication information of the current block comprises:

decoding the bitstream to determine prediction-mode indication information of the current block; and
decoding the bitstream to determine the illuminance-compensation-mode indication information of the current block, in response to determining, according to the prediction-mode indication information, that a prediction mode for the current block is a first-type prediction mode.

21. The method of claim 1, wherein determining the illuminance-compensation-mode indication information of the current block comprises:

determining an index of motion information of the current block;
determining illuminance-mode indication information of a reference block of the current block according to the index of the motion information; and
determining the illuminance-mode indication information of the reference block as the illuminance-compensation-mode indication information of the current block.

22. The method of claim 21, wherein determining the index of the motion information of the current block comprises:

decoding a bitstream to determine prediction-mode indication information of the current block; and
decoding the bitstream to determine the index of the motion information of the current block, in response to determining, according to the prediction-mode indication information, that a prediction mode for the current block is a second-type prediction mode.

23. The method of any one of claims 19 to 22, wherein the illuminance-compensation-mode indication information comprises a first syntax element flag, wherein the first syntax element flag indicates whether the illuminance compensation mode is used for the current block.

24. The method of claim 23, wherein the illuminance-compensation-mode indication information further comprises a second syntax element flag, wherein the second syntax element flag comprises at least one of:

a sequence-level syntax element flag indicating whether the illuminance compensation mode is enabled for a picture sequence where the current block is located;
a picture-level syntax element flag indicating whether the illuminance compensation mode is enabled for a picture where the current block is located;

a coding tree unit (CTU)-level syntax element flag indicating whether the illuminance compensation mode is enabled for a CTU where the current block is located; or

a slice-level syntax element flag indicating whether the illuminance compensation mode is enabled for a slice where the current block is located.

**25.** The method of any one of claims 19 to 22, further comprising:

determining an area of the current block;

determining, according to the illuminance-compensation-mode indication information of the current block, whether the illuminance compensation mode is used, in response to the area being within a preset area range; and

determining that the illuminance compensation mode is not used for the current block, in response to the area being out of the preset area range.

**26.** The method of claim 25, wherein

the preset area range comprises: the area of the current block being greater than a first area threshold and less than a second area threshold; or

the preset area range comprises: the area of the current block being greater than the first area threshold.

**27.** The method of claim 1, further comprising:

decoding a bitstream to determine prediction-mode indication information of the current block;

determining a target prediction mode for the current block according to the prediction-mode indication information;

determining a reference block of the current block in a reference picture according to the target prediction mode; and

determining the first prediction block according to the reference block.

**28.** The method of claim 27, wherein determining the first prediction block according to the reference block comprises:

determining the first prediction block by performing block copy on the reference block, in response to the target prediction mode being an intra block copy (IBC) mode; and

determining the first prediction block by performing motion compensation on the reference block, in response to the target prediction mode being an inter prediction mode.

**29.** The method of claim 1, further comprising:

decoding a bitstream to determine residual information of the current block; and

determining a reconstructed block of the current block according to the residual information and the second prediction block.

**30.** An encoding method, applied to an encoder and comprising:

determining a plurality of candidate template regions used for an illuminance compensation mode;

determining a target template region corresponding to a minimum cost value by performing cost calculation on the candidate template region based on template matching;

determining a target illuminance compensation model parameter according to the target template region;

determining a second prediction block of a current block by performing illuminance compensation on a first prediction block of the current block according to the target illuminance compensation model parameter;

determining illuminance-compensation-mode indication information of the current block by making encoding decision on the illuminance compensation mode according to the second prediction block;

encoding the illuminance-compensation-mode indication information, and signalling obtained encoded bits in a bitstream.

**31.** The method of claim 30, wherein determining the plurality of candidate template regions used for the illuminance compensation mode comprises:

determining the plurality of candidate template regions according to reconstructed at least two sub-template regions.

**32.** The method of claim 31, further comprising:

detecting whether both a first sub-template region of the current block and a first sub-template region of a reference block are available;
determining the candidate template region based on the first sub-template region, in response to both the first sub-template region of the current block and the first sub-template region of the reference block being available; and
ignoring the first sub-template region, in response to the first sub-template region of the current block and/or the first sub-template region of the reference block being unavailable.

**33.** The method of claim 31, wherein the sub-template region comprises at least one of: a top sub-template region, a top-right sub-template region, a left sub-template region, a bottom-left sub-template region, or a top-left sub-template region.

**34.** The method of claim 33, wherein determining the plurality of candidate template regions according to the reconstructed at least two sub-template regions comprises:

determining a first candidate template region according to the top sub-template region and the left sub-template region;
determining a second candidate template region according to the left sub-template region; and
determining a third candidate template region according to the top sub-template region.

**35.** The method of claim 31, further comprising:

determining a height of the candidate template region according to a height of the current block; and
determining a width of the candidate template region according to a width of the current block.

**36.** The method of claim 31, further comprising:

determining that a height of the candidate template region is a first value preset; and
determining that a width of the candidate template region is a second value preset;
wherein the first value is greater than or equal to 1, and the second value is greater than or equal to 1.

**37.** The method of claim 30, wherein determining the target template region corresponding to the minimum cost value by performing cost calculation on the candidate template region based on template matching comprises:

determining a template region of the current block and a template region of a reference block according to the candidate template region;
determining a candidate illuminance compensation model parameter corresponding to the candidate template region according to a first reconstructed sample in the template region of the current block and a second reconstructed sample in the template region of the reference block;
determining a first prediction sample in the template region of the current block according to the candidate illuminance compensation model parameter;
determining a first cost value of the candidate template region by performing cost calculation according to a third reconstructed sample and the first prediction sample in the template region of the current block; and
determining the target template region corresponding to the minimum cost value according to the first cost value.

**38.** The method of claim 37, wherein a reconstructed sample in the template region of the reference block is a motion-compensated reconstructed sample.

**39.** The method of claim 37, wherein determining the first prediction sample in the template region of the current block according to the candidate illuminance compensation model parameter comprises:
applying the candidate illuminance compensation model parameter to a fourth reconstructed sample in the template region of the reference block, to obtain the first prediction sample in the template region of the current block.

**40.** The method of claim 39, further comprising:

determining the first reconstructed sample by sampling a first template region in the template region of the current block;

determining the second reconstructed sample by sampling a first template region in the template region of the reference block;

determining the third reconstructed sample by sampling a second template region in the template region of the current block; and

determining the fourth reconstructed sample by sampling a second template region in the template region of the reference block.

41. The method of claim 40, wherein the first template region is non-adjacent to the current block and the reference block of the current block, and the second template region is adjacent to the current block and the reference block of the current block;

wherein the first template region does not overlap with the second template region, or the first template region partially overlaps with the second template region.

42. The method of claim 37, wherein determining the first prediction sample in the template region of the current block according to the candidate illuminance compensation model parameter comprises:

applying the candidate illuminance compensation model parameter to a prediction sample of the first prediction block, to obtain the first prediction sample in the template region of the current block.

43. The method of claim 37, further comprising:

determining a second prediction sample in the template region of the current block according to a reconstructed sample in the template region of the reference block;

determining a second cost value of the candidate template region by performing cost calculation according to a reconstructed sample and the second prediction sample in a current template region;

determining that the illuminance compensation mode is used for the current block, in response to the minimum cost value being the first cost value; and

determining that the illuminance compensation mode is not used for the current block, in response to the minimum cost value being the second cost value.

44. The method of claim 43, further comprising:

determining the second prediction sample in the template region of the current block according to the reconstructed sample in the template region of the reference block, in response to determining that a prediction mode for the current block is a merge mode.

45. The method of claim 43, further comprising:

based on a determination that the illuminance compensation mode is not used for the current block, determining a reconstructed block of the current block according to the first prediction block;

determining residual information of the current block according to an original block and the reconstructed block of the current block; and

encoding the residual information, and signalling obtained encoded bits in a bitstream.

46. The method of claim 37, wherein determining the target illuminance compensation model parameter according to the target template region comprises:

determining the template region of the current block and the template region of the reference block according to the target template region; and

determining the target illuminance compensation model parameter corresponding to the target template region according to the third reconstructed sample in the template region of the current block and a fourth reconstructed sample in the template region of the reference block.

47. The method of any one of claims 30 to 46, wherein an illuminance model is a linear model constructed based on a linear function, and an illuminance compensation model parameter comprises at least one of: a scaling parameter, an offset parameter, or a shift parameter.

48. The method of claim 30, wherein determining the illuminance-compensation-mode indication information of the current block comprises:

determining the illuminance-compensation-mode indication information of the current block according to whether the illuminance compensation mode is used for the current block.

49. The method of claim 48, further comprising:

determining prediction-mode indication information of the current block according to a prediction mode for the current block;
determining the illuminance-compensation-mode indication information of the current block according to whether the illuminance compensation mode is used for the current block, in response to determining, according to the prediction-mode indication information, that the prediction mode for the current block is a first-type prediction mode; and
encoding the prediction-mode indication information, and signalling obtained encoded bits in a bitstream.

50. The method of claim 30, wherein determining the illuminance-compensation-mode indication information of the current block comprises:
determining an index of motion information of the current block, wherein the index of the motion information indicates illuminance-mode compensation information of the current block.

51. The method of claim 50, further comprising:

determining prediction-mode indication information of the current block according to a prediction mode for the current block;
determining the index of the motion information of the current block, in response to determining, according to the prediction-mode indication information, that the prediction mode for the current block is a second-type prediction mode;
determining the index of the motion information as the illuminance-compensation-mode indication information of the current block; and
encoding the prediction-mode indication information, and signalling obtained encoded bits in a bitstream.

52. The method of any one of claims 48 to 51, wherein the illuminance-compensation-mode indication information comprises a first syntax element flag, wherein the first syntax element flag indicates whether the illuminance compensation mode is used for the current block.

53. The method of claim 52, wherein the illuminance-compensation-mode indication information further comprises a second syntax element flag, wherein the second syntax element flag comprises at least one of:

a sequence-level syntax element flag indicating whether the illuminance compensation mode is enabled for a picture sequence where the current block is located;
a picture-level syntax element flag indicating whether the illuminance compensation mode is enabled for a picture where the current block is located;
a coding tree unit (CTU)-level syntax element flag indicating whether the illuminance compensation mode is enabled for a CTU where the current block is located; or
a slice-level syntax element flag indicating whether the illuminance compensation mode is enabled for a slice where the current block is located.

54. The method of any one of claims 48 to 51, further comprising:

determining an area of the current block;
determining, according to the illuminance-compensation-mode indication information of the current block, whether the illuminance compensation mode is used, in response to the area being within a preset area range; and
determining that the illuminance compensation mode is not used for the current block, in response to the area being out of the preset area range.

55. The method of claim 54, wherein

the preset area range comprises: the area of the current block being greater than a first area threshold and less than a second area threshold; or

the preset area range comprises: the area of the current block being greater than the first area threshold.

**56.** The method of claim 30, further comprising:

determining a reference block of the current block in a reference picture according to a target prediction mode; and
determining the first prediction block according to the reference block.

**57.** The method of claim 56, wherein determining the first prediction block according to the reference block comprises:

determining the first prediction block by performing block copy on the reference block, in response to the target prediction mode being an intra block copy (IBC) mode; and
determining the first prediction block by performing motion compensation on the reference block, in response to the target prediction mode being an inter prediction mode.

**58.** The method of claim 30, further comprising:

based on a determination that the illuminance compensation mode is used for the current block, determining a reconstructed block of the current block according to the second prediction block;
determining residual information of the current block according to an original block and the reconstructed block of the current block; and
encoding the residual information, and signalling obtained encoded bits in a bitstream.

**59.** A bitstream generated by performing bit encoding according to information to-be-encoded, wherein the information to-be-encoded comprises at least one of: illuminance-compensation-mode indication information, prediction-mode indication information, an index of motion information, or residual information of a current block.

**60.** An encoder, comprising a first determining unit, a second determining unit, and an encoding unit, wherein:

the first determining unit is configured to determine a plurality of candidate template regions used for an illuminance compensation mode;
the first determining unit is configured to determine a target template region corresponding to a minimum cost value by performing cost calculation on the candidate template region based on template matching;
the first determining unit is configured to determine a target illuminance compensation model parameter according to the target template region;
the second determining unit is configured to determine a second prediction block of a current block by performing illuminance compensation on a first prediction block of the current block according to the target illuminance compensation model parameter;
the second determining unit is configured to determine illuminance-compensation-mode indication information of the current block by making encoding decision on the illuminance compensation mode according to the second prediction block; and
the encoding unit is configured to encode the illuminance-compensation-mode indication information, and signal obtained encoded bits in a bitstream.

**61.** An encoder, comprising a first memory and a first processor, wherein:

the first memory is configured to store a computer program executable by the first processor; and
the first processor is configured to perform the method of any one of claims 30 to 58 when executing the computer program.

**62.** A decoder, comprising a decoding unit, a third determining unit, and a fourth determining unit, wherein:

the decoding unit is configured to determine illuminance-compensation-mode indication information of a current block;
the third determining unit is configured to determine a plurality of candidate template regions used for an illuminance compensation mode, in response to determining, according to the illuminance-compensation-mode indication information, that the illuminance compensation mode is used for the current block;
the third determining unit is configured to determine a target template region corresponding to a minimum cost value by performing cost calculation on the candidate template region based on template matching;

the fourth determining unit is configured to determine a target illuminance compensation model parameter according to the target template region; and

the fourth determining unit is configured to determine a second prediction block of the current block by performing illuminance compensation on a first prediction block of the current block according to the target illuminance compensation model parameter.

63. A decoder, comprising a second memory and a second processor, wherein:

the second memory is configured to store a computer program executable by the second processor; and
the second processor is configured to perform the method of any one of claims 1 to 29 when executing the computer program.

64. A computer-readable storage medium configured to store a bitstream generated according to the encoding method of any one of claims 30 to 58.

65. A computer-readable storage medium configured to store a computer program which, when executed, is operable to implement the method of any one of claims 1 to 29 or the method of any one of claims 30 to 58.

FIG. 1A

FIG. 1B

FIG. 2

RECONSTRUCTED
SAMPLES

RECONSTRUCTED
SAMPLES

CU IN REFERENCE
PICTURE

CU IN CURRENT
PICTURE

FIG. 3

41

42

Author Your
Presentation

Finish Your
Presentation

Deliver Your
Presentation

FIG. 4

FIG. 5A

EP 4 787 842 A1

200

OUTPUT VIDEO SIGNAL

206 DECODED PICTURE BUFFER UNIT

205 FILTERING UNIT

204 MOTION COMPENSATION UNIT

203 INTRA PREDICTION UNIT

INTER/INTRA SELECTION

202 INVERSE TRANSFORM AND INVERSE QUANTIZATION UNIT

201 DECODING UNIT

INPUT BITSTREAM

FIG. 5B

41

FIG. 6

DETERMINE MULTIPLE CANDIDATE TEMPLATE REGIONS USED FOR ILLUMINANCE COMPENSATION MODE — S701

DETERMINE TARGET TEMPLATE REGION CORRESPONDING TO MINIMUM COST VALUE BY PERFORMING COST CALCULATION ON CANDIDATE TEMPLATE REGIONS BASED ON TEMPLATE MATCHING — S702

DETERMINE TARGET ILLUMINANCE COMPENSATION MODEL PARAMETER ACCORDING TO TARGET TEMPLATE REGION — S703

DETERMINE SECOND PREDICTION BLOCK OF CURRENT BLOCK BY PERFORMING ILLUMINANCE COMPENSATION ON FIRST PREDICTION BLOCK OF CURRENT BLOCK ACCORDING TO TARGET ILLUMINANCE COMPENSATION MODEL PARAMETER — S704

DETERMINE ILLUMINANCE-COMPENSATION-MODE INDICATION INFORMATION OF CURRENT BLOCK BY MAKING ENCODING DECISION ON ILLUMINANCE COMPENSATION MODE ACCORDING TO SECOND PREDICTION BLOCK — S705

ENCODE ILLUMINANCE-COMPENSATION-MODE INDICATION INFORMATION, AND SIGNAL OBTAINED ENCODED BITS IN BITSTREAM — S706

FIG. 7

TOP

LEFT | CURRENT BLOCK

FIG. 8A

TOP

LEFT | CURRENT BLOCK

FIG. 8B

TOP

CURRENT BLOCK

FIG. 8C

| TOP | TOP-RIGHT |
|-----|-----------|
| CURRENT BLOCK | |

FIG. 8D

FIG. 8E

FIG. 9

FIRST ROW

SECOND ROW

CU IN REFERENCE
PICTURE

FIRST
COLUMN

CU IN CURRENT
PICTURE

SECOND
COLUMN

FIG. 10

DETERMINE ILLUMINANCE-COMPENSATION-MODE INDICATION INFORMATION OF CURRENT BLOCK — S1101

DETERMINE MULTIPLE CANDIDATE TEMPLATE REGIONS USED FOR ILLUMINANCE COMPENSATION MODE, WHEN IT IS DETERMINED ACCORDING TO ILLUMINANCE-COMPENSATION-MODE INDICATION INFORMATION THAT ILLUMINANCE COMPENSATION MODE IS USED FOR CURRENT BLOCK — S1102

DETERMINE TARGET TEMPLATE REGION CORRESPONDING TO MINIMUM COST VALUE BY PERFORMING COST CALCULATION ON CANDIDATE TEMPLATE REGIONS BASED ON TEMPLATE MATCHING — S1103

DETERMINE TARGET ILLUMINANCE COMPENSATION MODEL PARAMETER ACCORDING TO TARGET TEMPLATE REGION — S1104

DETERMINE SECOND PREDICTION BLOCK OF CURRENT BLOCK BY PERFORMING ILLUMINANCE COMPENSATION ON FIRST PREDICTION BLOCK OF CURRENT BLOCK ACCORDING TO TARGET ILLUMINANCE COMPENSATION MODEL PARAMETER — S1105

FIG. 11

— 120

ENCODER

— 1201
FIRST DETERMINING UNIT

— 1202
SECOND DETERMINING UNIT

— 1203
ENCODING UNIT

FIG. 12

120

ENCODER

1301

FIRST COMMUNICATION
INTERFACE

1304

1303

FIRST
PROCESSOR

1302

FIRST
MEMORY

FIG. 13

140

DECODER

1401

DECODING UNIT

1402

THIRD
DETERMINING UNIT

1403

FOURTH
DETERMINING UNIT

FIG. 14

_140

DECODER

_1501

SECOND COMMUNICATION
INTERFACE

_1504

_1503

SECOND
PROCESSOR

_1502

SECOND
MEMORY

FIG. 15

_160

_1601

ENCODER

_1602

DECODER

FIG. 16

# EP 4 787 842 A1

## INTERNATIONAL SEARCH REPORT

| | International application No. |
|---|---|
| | **PCT/CN2023/122317** |

**A. CLASSIFICATION OF SUBJECT MATTER**

H04N 19/167(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, VEN, DWPI, CNTXT, EPTXT, USTXT, JPTXT, IEEE, CNKI, 百度, Baidu: 光照, 亮度, 照度, 补偿, 编码, 解码, 候选, 模板, 重建, 区域, 样本, 代价, code, encode, candidate, template, reconstruct, region, cost, LIC, local, illuminance, compensation

**C. DOCUMENTS CONSIDERED TO BE RELEVANT**

| Category* | Citation of document, with indication, where appropriate, of the relevant passages | Relevant to claim No. |
|---|---|---|
| X | CN 116170593 A (BEIJING DAJIA INTERCONNECTION INFORMATION TECHNOLOGY CO., LTD.) 26 May 2023 (2023-05-26) description, paragraphs [0088]-[0217], and figures 1-7 | 1-58, 60-65 |
| X | WO 2022116246 A1 (GUANGDONG OPPO MOBILE TELECOMMUNICATIONS CORP., LTD.) 09 June 2022 (2022-06-09) description, page 7, line 12 to page 14, line 14, and figures 3-14c | 1-58, 60-65 |
| A | CN 111031319 A (ZHEJIANG DAHUA TECHNOLOGY CO., LTD.) 17 April 2020 (2020-04-17) entire document | 1-58, 60-65 |
| A | US 2020314446 A1 (SAMSUNG ELECTRONICS CO., LTD.) 01 October 2020 (2020-10-01) entire document | 1-58, 60-65 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 May 2024** | **28 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/122317** |

| **Box No. II** | **Observations where certain claims were found unsearchable (Continuation of item 2 of first sheet)** |

This international search report has not been established in respect of certain claims under Article 17(2)(a) for the following reasons:

1. ☑ Claims Nos.: **59**
because they relate to subject matter not required to be searched by this Authority, namely:

Claim 59 sets forth a code stream, and sets forth information itself, which is substantially a mere presentation of information, and falls within subject matter to be excluded.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/CN2023/122317**

| Patent document cited in search report | | | Publication date (day/month/year) | Patent family member(s) | | | Publication date (day/month/year) |
|---|---|---|---|---|---|---|---|
| CN | 116170593 | A | 26 May 2023 | None | | | |
| WO | 2022116246 | A1 | 09 June 2022 | MX | 2023006442 | A | 15 June 2023 |
| CN | 111031319 | A | 17 April 2020 | CN | 111031319 | B | 19 April 2022 |
| US | 2020314446 | A1 | 01 October 2020 | WO | 2019143093 | A1 | 25 July 2019 |
| | | | | KR | 20200100656 | A | 26 August 2020 |
| | | | | US | 11234016 | B2 | 25 January 2022 |

Form PCT/ISA/210 (patent family annex) (July 2022)